# EUROPÄISCHE PATENTSCHRIFT

(11) **EP 1 087 160 B1**
(45) Veröffentlichungstag und Bekanntmachung des Hinweises auf die Patenterteilung: **02.05.2002**
(21) Anmeldenummer: 00127871.2
(22) Anmeldetag: 28.10.1996
(51) Int. Cl.: F16L 3/26, H02G 3/04, E01C 11/22, H02G 9/04

(54) **Kabelkanal**
Cable duct
Canalisation de câbles

(30) Priorität: 26.10.1995 DE 19539828
(43) Veröffentlichungstag der Anmeldung: 28.03.2001
(62) Teilanmeldung aus: 96117293.9
(73) Patentinhaber: Braig, Dieter Otto, 70771 Leinfelden-Echterdingen (DE); Laux, Ernst-Ulrich, 70193 Stuttgart (DE); Stach, Günther Gerhard, 70192 Stuttgart (DE)
(72) Erfinder: Braig, Dieter Otto, 70771 Leinfelden-Echterdingen (DE); Laux, Ernst-Ulrich, 70193 Stuttgart (DE); Stach, Günther Gerhard, 70192 Stuttgart (DE)
(74) Vertreter: Beck, Jürgen, Dr. Dipl.-Phys.

(56) Entgegenhaltungen:
- DE-A- 4 307 260
- DE-U- 9 312 432

## Beschreibung

Die Erfindung betrifft einen Kabelkanal aus Kunststoff.

Bei erdverlegten Kabelkanälen (z.B. neben Gleiskörpern) muß zunächst ein Graben ausgehoben werden und anschließend ein Sandbett eingebracht werden. Die Anlieferung der schweren Beton- oder Stahlkanäle (bei Beton Deckelgewichte von 13 kg - 51 kg, Troggewichte von 37 kg - 147 kg) erfolgt meist mittels Schienenfahrzeugen oder auch per Lkw. Bei einer Anlieferung der Beton- bzw. Stahlteile sind die Anladungsvorschriften der StVO für Lkws zu beachten, so daß eine Ausnutzung des vorhandenen Ladevolumens der Fahrzeuge wegen des hohen Stückgewichts der Einzelteile meist nicht möglich ist.

Zur Be- und Entladung der Transportfahrzeuge sowie der Verlegung der Kanäle im Sandbett und auch in aufgeständerter Form, ist maschinelles Hebezeug zwingend erforderlich. Die auf den Transportfahrzeugen montierten Kräne können jeweils nur einen Kabelkanal aufnehmen und in das Sandbett legen, wozu es noch der Hilfe des Verlegetrupps bedarf. Diese sehr aufwendige Methode führt zu langen Bauzeiten und hohen Baukosten. Darüber hinaus muß der jeweilige Schienenweg aus Sicherheitsgründen für den sonstigen Verkehr teilweise gesperrt bleiben. Diese Sperrzeiten führen für den Schienennetzbetreiber zu zusätzlichen Kosten.

Die eigentliche Verlegung der schweren Teile ist ebenfalls sehr kraft- und zeitraubend, da diese nur unter Einsatz von Hilfsmitteln exakt ausgeführt werden kann.

Bei Verwendung von Betonteilen kommt es durch die geringe Elastizität des Materials sehr leicht zu Beschädigungen, wie Bruch, Absplitterung o.ä., damit zu erhöhtem Materialverbrauch, längeren Bau- und Sperrzeiten und somit höheren Kosten.

Weitere Nachteile (insbesondere bei aufgeständerten Kabelkanälen) bei Betonteilen entstehen bei Reparaturarbeiten an bereits verlegten Kanälen (bzw. den darin verlegten Kabeln) sowie beim nachträglichen Einziehen weiterer Kabelstränge. Insbesondere bei den wenig elastischen Deckelteilen besteht erhöhte Bruchgefahr beim Abnehmen und Wiederauflegen.

Das nachträgliche Einziehen neuer Kabel erfordert manuelle oder maschinelle Arbeiten zur Herstellung von Öffnungen für den Kabelein- bzw. -austritt.

Im Brückenbereich können zusätzliche Probleme bei der Verlegung, Befestigung, Reparatur und nachträglicher Kabeleinführung auftreten, da häufig mit überlangen Bauteilen und noch höheren Stückgewichten (bis zu 4 Tonnen) gearbeitet wird.

Neben den bereits oben beschriebenen Kosten entstehen zusätzliche Entsorgungskosten für die beschädigten, nicht mehr einsetzbaren Teile.

Der Einsatz von Beton- bzw. Stahlkabelkanälen erfordert eine hohe Anzahl genormter Sonderteile, wie z.B. Umlenkungen von Hindernissen aller Art. Eine Veränderung der Teile vor Ort ist auch unter Einsatz entsprechender Werkzeuge nur sehr schwer möglich und mit zusätzlichen Kosten verbunden.

Die bisher häufig verwendeten obenliegenden Deckel entsprechen nicht mehr den neuesten Anforderungen (z.B. an Schnellbahnstrecken), da sie nicht fest mit dem Trog verbunden sind. Dies kann dazu führen, daß der Deckel durch die Sogwirkung eines vorbeifahrenden Zuges vom Trog hochgerissen wird und ein erhebliches Gefahrenpotential darstellt.

Eine Lösung einiger dieser Nachteile ist aus DE-A-43 07 260 bekannt.

Die Aufgabe der Erfindung ist einen Kabelkanal zu schaffen, der erhebliche Vorteile in bezug auf Transport, Verlegbarkeit, Handling, Verarbeitbarkeit und der Verbindung untereinander ausweist.

Diese Aufgabe wird erfindungsgemäß durch einen Kabelkanal gemäß Anspruch 1 gelöst.

Weitere vorteilhafte Ausführungsformen sind Gegenstand der Ansprüche 2 bis 71.

Die erfindungsgemäße Lösung erlaubt es in besonders einfacher und kostengünstiger Weise, einen aufgeständerten Kabelkanal zu realisieren.

Die Verlegungsmöglichkeit der Kabelkanäle in aufgeständerter Form wird insbesondere durch entsprechende Bohrungen im Trogboden sichergestellt.

Durch diese Bohrungen wird mit Hilfe von Steckelementen (wie z.B. Bolzen) eine Verbindungsmöglichkeit mit einem Zusatzteil mit entsprechenden Bohrungen geschaffen, wobei das Zusatzteil ein Verbindungselement zum eigentlichen Ständer darstellt und eine stabile Verlegung der Kabelkanäle ermöglicht.

Das Zusatzteil besitzt vorzugsweise in der Mitte eine querlaufende Einkerbung, die eine passgenaue Aufnahme der Endrippen zweier Tröge ermöglicht und trotzdem der vorgegebenen Streckenführung als Polygonlinie folgen kann.

Die Verbindung zum Ständer erfolgt beispielsweise durch ein an der Unterseite des Zusatzteils befindliches Profil, das auf den Ständer aufgesetzt wird. Die Verbindung der beiden Teile erfolgt beispielsweise durch weitere Steckelemente.

Der Ständer ist zweckmäßigerweise in seiner Form der Form des Profils an der Unterseite des Zusatzteils angepaßt.

Die vieleckige Form wird vorzugsweise dann zur Anwendung kommen, wenn eine nicht drehbare Verbindung mit dem Zusatzteil bei der Montage erforderlich ist.

Sollte bei der Montage ein nachträgliches Drehen des Zusatzteils zur polygonförmigen Verlegung notwendig sein, so wird vorzugsweise ein Rundprofil eingesetzt.

Der Ständer wird aus Gründen der Gewichts- und Materialersparnis vorzugsweise als Hohlprofil hergestellt, was auch vorteilhafterweise zur Verbesserung seiner statischen Eigenschaften führt.

Die Verankerung der Ständer im Erdreich erfolgt beispielsweise mit Hilfe eines Ständerfußes, dessen Grundfläche eine beliebige Form aufweist.

Auf der Oberseite dieser als Grundfläche dienenden Platte befindet sich ein zweckmäßigerweise der Ständerform entsprechendes Profil mit Bohrungen, in das der Ständer eingesetzt wird. Die Verbindung der beiden Teile erfolgt beispielsweise durch weitere Steckelemente.

Nach dem Einsetzen des Ständers mit dem entsprechenden Ständerfuß in ein dafür ausgehobenes Loch wird dieses z.B. mit Erde verfüllt und bietet dem Ständer sicheren Halt.

Bei Verwendung eines Trägerprofils, das beispielsweise die Form eines Doppel-T-Trägers haben kann, lassen sich leicht größere Distanzen bei einer geringeren Ständerzahl überbrücken. Die Verbindung der bereits gesetzten Ständer mit dem Zusatzteil sowie dem Trägerprofil erfolgt beispielsweise ebenfalls durch Steckelemente.

Anschließend wird das Trägerprofil z.B. durch Winkelprofile mit Bohrlöchern und Steckelementen mit den Bohrlöchern in den Querrippen am Trogboden verbunden.

Alle Bestandteile des Kabelkanals können wegen ihrer Unverrottbarkeit vorteilhafterweise in allen klimatischen Bereichen eingesetzt werden.

Sollten in der Zukunft aufgrund veränderter Anforderungen oder des technischen Fortschritts andere Materialien zum Einsatz kommen, können die Kunststoffteile vorteilhafterweise zu 100% recycelt und in den Rohstoffkreislauf zurückgeführt werden.

Insgesamt umfaßt die Erfindung vorzugsweise einen Kunststoff-Kabelkanal aus Trog, Deckel, Trennelement, Ständer, Ständerfuß und Träger.

Die bisher eingesetzten Kabelkanäle bestehen überwiegend aus Stahlblech bzw. Beton. Ihnen ist gemeinsam, daß sie ein sehr hohes Stückgewicht aufweisen und daraus resultierend schwer transportabel und vor allem schwer verlegbar sind. Die Verlegung von z.B. Betonteilen ist ohne den Einsatz von maschinellen Hebezeugen praktisch unmöglich.

Diese Nachteile treten beim Einsatz von Kabelkanälen aus Kunststoff nicht auf.

Die erfindungsgemäßen Kabelkanäle aus Kunststoff sind sehr leicht zu verlegen und zu transportieren. Durch ihr spezielles Verschlußsystem sind sie sehr einfach und sicher verschließbar, so daß der Deckel bei oberirdischer Verlegung nicht durch den Sog vorbeifahrender Fahrzeuge abgehoben werden kann.

Vorzugsweise bestehen alle Teile aus Kunststoffen.

Ein erfindungsgemäßer Kabelkanal dient zur Verlegung z.B. von Kabeln, Schrumpfgarnituren und Leitungen sowohl oberirdisch, im Erdreich, in aufgeständerter Form sowie an Bauwerken aller Art.

Mit der Erfindung ist ein Kabelkanal geschaffen, der wesentlich leichter und elastischer ist. Durch diese Eigenschaften verbessern sich seine Verlegbarkeit, seine Be- und Verarbeitungsfähigkeit sowie seine Transporteigenschaften. Der so geschaffene Kabelkanal ist sowohl oberirdisch, im Erdreich, an Bauwerken und aufgeständert verlegbar. Eine oberirdische Verlegung findet in bestimmten Bauphasen statt, aufgeständerte Verlegung wird notwendig bei beengten räumlichen Verhältnissen, z.B. auf Dämmen und in Geländeeinschnitten.

Die Befestigung an Bauwerken ist mit entsprechenden Hilfsmitteln sehr einfach möglich.

Auch eine Verlegung im Erdreich auf unbestimmte Zeit ist möglich.

Da insbesondere für alle Varianten der gleiche Kabelkanal einsetzbar ist, kann dieses Normteil in allen Verlegungsvarianten eingesetzt werden.

Häufig wird mit einer provisorischen, oberirdischen Verlegung in Bauphasen begonnen. Zu einem späteren Zeitpunkt werden die Kabelkanäle in ihren endgültigen Verlegungszustand (erdverlegt, aufgeständert und an Bauwerken) überführt.

Dieses läßt sich insbesondere durch das niedrige Gewicht der Bauteile zeitsparend und ohne Einsatz von Hebezeugen durchführen.

Durch die Verwendung verschiedener Kunststoffe kann individuell auf die besonderen Anforderungen eingegangen werden, die an den Kabelkanal gestellt werden.

Der Einsatz neuwertiger Kunststoffe empfiehlt sich bei hohen statischen Belastungen, recyceltes oder gemischtes Material findet demgegenüber bei entsprechend niedrigeren Ansprüchen in diesem Bereich Anwendung. Allen eingesetzten Kunststoffen ist vorzugsweise gemeinsam, daß sie recycelbar sind.

Die Herstellung der Einzelteile des Kanals (mit Ausnahme des Ständers) kann - abhängig von der Belastung und damit den notwendigen Wandstärken - zweckmäßigerweise entweder im Spritzguß- oder im Thermoplastschaumguß-Verfahren (TSG) erfolgen.

Der Ständer kann neben diesen Verfahren beispielsweise auch extrudiert werden.

Für alle anderen Teile empfiehlt sich vorteilhafterweise die Anwendung des Spritzguß- bzw. TSG-Verfahrens, da die individuelle und auch technisch anspruchsvolle Formgebung bereits in einem Produktionsschritt sichergestellt ist. Würde man diese Teile extrudieren, müßte die individuelle Formgebung in nachgelagerten Produktionsschritten wie z.B. Kleben, Schweißen, Bohren, Schneiden usw. arbeits- und kostenintensiv vorgenommen werden.

Neben den bisher beschriebenen Normteilen bei Trog und Deckel können auch Sonderteile, wie horizontale Umlenker und vertikale Absenker und Anheber eingesetzt werden, um Richtungsänderungen unter Berücksichtigung von Geländestrukturen zu ermöglichen. Diese Sonderteile besitzen die spezielle Eigenschaft, daß sie vorzugsweise bereits in der Herstellung in einem bestimmten Winkel horizontal oder vertikal geknickt wurden, wobei die Öffnung des Troges grundsätzlich nach oben zeigt.

Sollten besondere Geländestrukturen den Einsatz der oben beschriebenen Normteile und Sonderteile nicht ermöglichen, so können die Tröge zweckmäßigerweise anhand der vom Trogauflager in beliebig festlegbaren Winkeln ausgehenden Trennführungslinien auf der Innenseite bzw. Außenseite der Trogwandungen vor Ort individuell verkürzt werden.

Trennführungslinien befinden sich auch auf der Oberseite des Deckels und verlaufen in beliebig festlegbaren Winkeln von der Deckelaußenkante.

Die Veränderung der Teile erfolgt durch Schneiden bzw. Sägen entlang der oder parallel zu den Trennführungslinien und nach Maßgabe der Topographie.

Die vorgegebenen Trennführungslinien verkürzen Planungs- und Ausführungszeiten bei der Verlegung der Kanäle.

Besonders von Vorteil ist eine Auswölbung der Trennführungslinien auf der Oberseite des Deckels. Durch den beliebig festlegbaren Abstand der Trennführungslinien zueinander und die Auswölbung nach oben wird die Rutschfestigkeit beim Betreten des Deckels beträchtlich erhöht.

Zur Erzielung einer besseren statischen Belastbarkeit des Troges besitzt dieser an seinen Außenwandungen mehrere, den Trog zumindest teilweise umschließende Querrippen.

Die Trogwandungen können deshalb relativ dünn gehalten werden, wodurch der Materialeinsatz und das Gewicht niedrig gehalten werden. Somit kann der Trog besser und schneller verlegt werden.

Die Aussparungen in den Querrippen ermöglichen insbesondere den Wasserfluß in Längsrichtung zum Trog. Zusätzliche Hilfsmittel zur Verbesserung der Drainagewirkung unterhalb des Troges können somit entfallen.

Die Querrippen verbessern insbesondere auch die Lagestabilität des Troges in Verlegerichtung, so daß ein Verrutschen der Kanäle beim Einzug der Kabel verhindert wird. Dieses ist besonders bei oberirdischer Verlegung von Bedeutung.

Bei dieser Verlegeform muß selbstverständlich auch ein seitliches Verrücken der Tröge verhindert werden.

Hierbei sind insbesondere die an der verbreiterten Trogoberkante eines erfindungsgemäßen Beispiels vorgesehenen Öffnungen mit Sicherungsclips sowie die darunter befindlichen Führungshilfen, die beispielsweise an den Querrippen angebracht sind, von besonderem Nutzen.

Durch die Öffnungen können entsprechende Befestigungselemente in das Erdreich eingeschlagen und der Trog somit fixiert werden. Die Befestigungselemente sind in diesem Teil zweckmäßiger Weise kürzer zu wählen.

Da die Führungshilfen vorzugsweise an den Querrippen außerhalb des Troges angebracht sind, kommen die Befestigungselemente mit den im Trog verlegten stromführenden Kabeln nicht in Berührung, so daß Kurzschlüsse ausgeschlossen sind.

Sollte der oberirdisch verlegte Kabelkanal seitlich verschoben werden müssen, kann das Befestigungselement, auch bei bereits verlegten Kabeln, leicht aus dem Erdreich entfernt werden und dann erneut eingeschlagen werden.

Diese Befestigungsmethode verhindert auch das unerwünschte selbständige Anheben der Tröge z.B. bei Frost.

Außerdem wird durch diese Vorrichtung bei Verwendung der entsprechenden Befestigungselemente auch die Verbindung von nebeneinander und übereinander liegenden Trögen ermöglicht.

Um eine sinnvolle Verbindungsmöglichkeit zwischen zwei hintereinander liegenden erfindungsgemäßen Trögen zu schaffen, wurde ein Schloßsystem konzipiert, das durch eine spezielle, in ihrer Höhe, gemessen an der Seitenhöhe des Troges variable Endrippenausprägung an nur einem Trogende charakterisiert ist.

Betrachtet man die Endrippe einer Trogseite von oben, so kann das Schloß als liegendes U-Profil bezeichnet werden, da es nach oben, unten und zum Trog hin geöffnet ist.

Die Öffnungsbreite des Schloßsystems ist vorzugsweise größer als die Dicke der einzuführenden Endrippe des nächsten Troges.

Die Öffnungstoleranzen im Schloß gewährleisten eine gewisse Flexibilität für horizontale und vertikale Richtungsänderungen bei in das Schloß eingehängten Trögen. Die Flexibilität kann noch erhöht werden, wenn die Endrippe nur auf einer Seite in das Schloß eingeführt wird.

Dies hat den Vorteil, daß der Verlauf der Kabelkanäle auch polygonartig erfolgen kann.

Die dreiseitige Öffnung des Schloßsystems ist besonders vorteilhaft, da die Ablagerung von Sand und Steinen weitgehend verhindert wird. Sollten sich doch kleine Ablagerungen bilden, können diese dann leicht entfernt werden.

Der besondere Vorteil dieses speziellen Schloßsystems liegt in der Möglichkeit des Verzichts auf zusätzliche, eigenständige Verbindungselemente (z.B. Stecker) und Werkzeuge zu deren Entfernung.

Ein weiterer Vorteil besteht in der leichten Austauschbarkeit einzelner, z.B. beschädigter Kabelkanäle aus dem verlegten Verbund.

Eine sinnvolle Ergänzung zum Schutz gegen das Einwachsen von Pflanzen zwischen zwei hintereinander verlegten Trögen bildet beispielsweise eine erfindungsgemäße Verlängerung des Trogbodens beispielsweise über dessen gesamte Breite in vorzugsweise ungefähr horizontaler Richtung an einer Endrippe ohne Schloß, die ihre Komplementärin am anderen Ende des folgenden Troges findet.

Aus der Konstruktion und Anordnung des Schloßsystems sowie der Verlängerung des Trogbodens ergibt sich automatisch die richtige Anordnung zweier hintereinander zu verlegender Tröge.

Eine weitere Erleichterung bei der Verlegung des Kabelkanalsystems bieten die beispielsweise auf der verbreiterten Trogoberkante angebrachten Pfeile, die die Verlegerichtung nochmals anzeigen.

Die im Trogboden ungefähr in Längsrichtung verlaufende Einkerbung dient, falls nötig, der Befestigung von Trennelementen und ermöglicht somit eine getrennte Führung der Kabelstränge, wodurch die Übersichtlichkeit und der spätere Zugang zu bestimmten Kabeln beträchtlich erhöht wird.

Durch die Verwendung beispielsweise mehrerer Trennelemente, in einem Trog in Reihe ist sichergestellt, daß die Trennelemente vorzugsweise bei allen verwendeten Norm- und Sonderteilen einsetzbar sind.

Darüber hinaus ist es auch möglich, die Trennelemente in individuell nachträglich veränderte Tröge einzubauen.

Vorzugsweise im Boden der Einkerbung befinden sich Durchbrüche, die den Abfluß eventuell eingedrungenen Wassers ermöglichen.

An den Trogwandungen und am Boden des Troges sind beispielsweise perforierte Ausbruchstellen vorgesehen, damit ein nachträgliches Einziehen bzw. der Anschluß weiterer Kabel ohne Bearbeitung des Troges mit Schneidewerkzeugen durch beide Trogwandungen und den Boden möglich ist.

Vorzugsweise ist ein erfindungsgemäßer Deckel mit einem Schnappverschlußsystem an dem Trog fixiert. Bei einem erfindungsgemäßen Beispiel eines derartigen Schnappverschlußsystems verläuft parallel und unterhalb der Trogoberkante, auf einer oder beiden versetzten Innenwandungen des Troges, nicht unbedingt über dessen gesamte Länge ein konkaver Kreisabschnitt, der zusammen mit einem oder mehreren konvexen Kreisabschnitten an den Außenseiten des Deckels das Schnappverschlußsystem bildet.

Die Aussparungen in der Verbreiterung der Trogoberkante eines erfindungsgemäßen Beispiels bilden horizontale Auflager für die entsprechenden beispielsweise hakenförmig geformten Profile an den Deckelaußenseiten.

Die vorzugsweise ungefähr vertikale Verlängerung der Trogoberkante nach unten schützt die nicht unbedingt über die gesamte Breite der Trogoberkante verlaufende Aussparung vor Verschmutzungen durch das Erdreich.

Dieses Klammerverschlußsystem ist einerseits leicht zu verschließen und auch wieder zu öffnen, andererseits verhindert es wirkungsvoll ein ungewolltes Abheben des Deckels durch äußere Einflüsse wie z.B. den Sog von mit hoher Geschwindigkeit vorbeifahrender Fahrzeuge.

Besonders zweckmäßig erscheint die Aufbewahrungsmöglichkeit des Deckels innerhalb des Troges während der Bau- bzw. Verlegezeiten. Hierzu wurden sinnvollerweise Schienen an der Troginnenwandung angebracht. Ein erfindungsgemäßes Ausführungsbeispiel des Deckels besitzt an der Deckelunterseite entsprechend geformte Ausprägungen, die ein Einhängen des Deckels im Trog leicht und sicher ermöglichen.

Dieses System verhindert das Wegfliegen der Deckel infolge von Sogwirkungen vorbeifahrender Fahrzeuge.

Das Abbrechen dieser Ausprägungen beim Transport und der Lagerung wird beispielsweise durch punktuelle Erhöhungen an der Deckelunterseite auf mindestens die gleiche Höhe wie die Ausprägungen wirksam verhindert.

Für die horizontal und vertikal abgewinkelten Tröge sind entsprechende Deckelvarianten als Sonderteile konzipiert und bilden somit ein System.

Sollten besondere Gegebenheiten eine individuelle Gestaltung der Deckelteile erfordern, so kann eine Verkürzung leicht anhand der auf dem Deckel befindlichen Trennführungslinien vorgenommen werden.

Um einen Wärmestau im Trog zu verhindern, sind zweckmäßigerweise im Deckel Belüftungsöffnungen zur Verbesserung der Luftzirkulation vorgesehen.

Die Unterseite des Deckels weist vorteilhafterweise eine Rippenstruktur auf, wodurch die Stabilität des Deckels entsprechend der vorgegebenen Druckbelastung erreicht wird.

Gleichzeitig kann die Wanddicke gering gehalten werden, wodurch der Materialeinsatz und das Gewicht des Deckels niedrig gehalten wird und dessen Belastbarkeit verbessert wird.

Ein weiteres ausführungsgemäßes Beispiel eines Kabelkanals besitzt ausschließlich ungefähr vertikal aus dem Trogboden hervorgehende Trogwandungen.

Bei dieser Variante wird der Deckel auf an den Troginnenwandungen zunächst ungefähr vertikal aus dem Bogen des U-Profils hervorgehenden, und dann noch unterhalb der Trogoberkante ungefähr horizontal bis an die Troginnenwand verlaufenden Ausprägungen aufgelegt. Gleichzeitig rasten die Befestigungsmittel an der Deckelaußenseite form- und kraftschlüssig in die Aussparungen der Verbreiterung der Trogoberkante und die in diesem Bereich speziell geformte Trogwand ein und geben dem Deckel festen und sicheren Halt gegen beispielsweise Sogwirkungen vorbeifahrender Fahrzeuge.

Zweckmäßigerweise sind beispielsweise an der Unterseite des Deckels Befestigungsmittel angebracht, die bei geschlossenem Deckel in die Durchbrüche im oberen Bereich der Ausprägungen, die an den Troginnenwandungen angebracht sind, eingerastet sind.

Ein weiterer erfindungsgemäßer Vorteil liegt in der Befestigungsmöglichkeit der Deckel innerhalb der Tröge, z.B. während Bauphasen, damit ein Wegfliegen der Deckel durch Sogwirkung unterbunden wird.

Hierzu wurden sinnvollerweise ebenfalls z.B. an der Unterseite des Deckels zapfenähnliche, mit Auswölbungen an ihren Innenseiten versehene Ausprägungen angebracht, die das Einhängen des Deckels an den entsprechend geformten Verbreiterungen, der an den Troginnenwandungen angebrachten Ausprägungen, ermöglichen.

Die Verbindung der einzelnen Tröge erfolgt durch ein Endrippenschloß, das durch seine besondere Ausführung auch Anpassungen an die Topographie erlaubt.

Das Einwachsen von Pflanzen in das Troginnere wird durch eine Trogbodenverlängerung und deren formschlüssige Aufnahme in nachfolgenden Trog verhindert.

Die Befestigung einzelner Tröge auf dem Erdplanum (z.B. in Bauphasen) und in der Erde wird durch in außenliegende Führungshilfen einzuschlagende Befestigungselemente erreicht. Diese können leicht und schnell wieder entfernt werden und haben keinen Kontakt zu den stromführenden Kabeln im Trog.

Eine nachträgliche Verkürzung von Trog und Deckel ist wegen der an beiden Teilen vorgesehenen Trennführungslinien und des verwendeten Materials schnell und leicht möglich.

Ein bei Bedarf montierbares Trennelement ermöglicht die getrennte Führung der zu verlegenden Kabel.

Die Kunststoffkabelkanäle dienen der Verlegung von Kabeln, Kabelsträngen und Schrumpfgarnituren in oberirdischer, aufgeständerter und erdverlegter Form sowie an Bauwerken befestigt.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Figur 1: einen Querschnitt durch ein erfindungsgemäßes Ausführungsbeispiel des Troges, längs Linie 1-1 in Figur 2;
- Figur 2: eine Draufsicht auf ein erfindungsgemäßes Ausführungsbeispiel in Richtung des Pfeils A in Figur 1 des Troges;
- Figur 3: eine Detailansicht eines erfindungsgemäßen Ausführungsbeispiels eines Schlosses an der Endrippe eines erfindungsgemäßen Troges. Längsschnitt, Linie 2-2 in Figur 2;
- Figur 4: eine Außenansicht eines erfindungsgemäßen Ausführungsbeispiels eines Schlosses an einer Endrippe in Richtung des Pfeils B in Figur 2;
- Figur 5: einen Querschnitt durch ein erfindungsgemäßes Ausführungsbeispiel des Deckels. Querschnitt Linie 3-3 in Figur 6;
- Figur 6: eine Deckelansicht eines erfindungsgemäßen Ausführungsbeispiels eines Deckels von unten;
- Figur 7: eine Deckelansicht eines erfindungsgemäßen Ausführungsbeispiels eines Deckels von oben;
- Figur 8: ein Querschnitt des an einem erfindungsgemäßen Ausführungsbeispiel eines Troges befindlichen Teils eines Ausführungsbeispiels des Trog-Deckel-Verschlußsystems;
- Figur 9: einen Längsschnitt durch ein erfindungsgemäßes Ausführungsbeispiel der Trogauflagerplatte. Längsschnitt Linie 4-4 in Figur 11;
- Figur 10: einen Querschnitt durch ein erfindungsgemäßes Ausführungsbeispiel der Trogauflagerplatte. Querschnitt Linie 5-5 in Figur 11;
- Figur 11: eine Bodenansicht eines erfindungsgemäßen Ausführungsbeispiels einer Auflagerplatte;
- Figur 12: einen Querschnitt durch ein erfindungsgemäßes Ausführungsbeispiel eines Ständers. Querschnitt Linie 6-6 in Figur 13;
- Figur 13: eine Ansicht eines erfindungsgemäßen Ausführungsbeispiels eines Ständers;
- Figur 14: eine Draufsicht auf ein erfindungsgemäßes Ausführungsbeispiel eines Ständerfußes, Linie 6-6 in Figur 13;
- Figur 15: ein Querschnitt durch ein erfindungsgemäßes Ausführungsbeispiel eines Ständerfußes, Querschnitt Linie 7-7 in Figur 14;
- Figur 16: eine Draufsicht auf ein erfindungsgemäßes Ausführungsbeispiel eines Deckels eines erfindungsgemäßen Ausführungsbeispiels eines "Umlenkungstroges";
- Figur 17: eine Draufsicht auf ein erfindungsgemäßes Ausführungsbeispiel eines "Umlenkungstroges";
- Figur 18: eine Seitenansicht auf ein erfindungsgemäßes Ausführungsbeispiel eines "Absenkertroges" mit einem dazu passenden erfindungsgemäßen Ausführungsbeispiel eines Deckels;
- Figur 19: eine Seitenansicht auf ein erfindungsgemäßes Ausführungsbeispiel eines "Anhebertroges" mit einem dazu passenden erfindungsgemäßen Ausführungsbeispiel eines Deckels;
- Figur 20: eine Detailansicht eines erfindungsgemäßen Beispiels einer Führungshilfe an einer Querrippe, einer ebenfalls erfindungsgemäßen Öffnung mit Sicherungsclips in der verbreiterten Trogoberkante sowie der dort befindlichen Aussparung;
- Figur 21: ein Querschnitt durch zwei erfindungsgemäße Kabelkanäle und deren erfindungsgemäße Verbindung mit Befestigungselementen bei übereinander gestapelten Kabelkanälen;
- Figur 22: ein Querschnitt durch zwei erfindungsgemäße Kabelkanäle und deren erfindungsgemäße Verbindung mit Befestigungselementen bei nebeneinander gestellten Kabelkanälen.
- Figur 23: ein Ausschnitt eines erfindungsgemäßen Kabelkanals mit erfindungsgemäßen Durchbrüchen in der Einkerbung im Trogboden, der erfindungsgemäßen Verlängerung des Trogbodens, Ausbruchstellen und weiterer technischer Details;
- Figur 24: eine Frontansicht eines erfindungsgemäßen Beispiels der aufgeständerten Version des Kabelkanals mit einem Trägerprofil;
- Figur 25: eine Detailansicht eines erfindungsgemäßen Beispiels der Öffnung mit Sicherungsclips;
- Figur 26: ein verkürzter Längsschnitt durch ein erfindungsgemäßes Beispiel eines Troges (Innenansicht);
- Figur 27: ein Halbschnitt durch ein erfindungsgemäßes Beispiel eines geschlossenen Trog-Deckel-Systems längs Linie 8-8 in Figur 26;
- Figur 28: ein Detailschnitt eines erfindungsgemäßen Beispiels des Eingriffs der Befestigungsmittel an der Deckelunterseite in die Öffnungen im oberen Bereich der Ausprägungen an den Troginnenwandungen bei geschlossenem Trog-Deckel-System;
- Figur 29: ein Detailschnitt eines erfindungsgemäßen Beispiels der Einhängevorrichtung von Trog und Deckel und
- Figur 30: ein Querschnitt durch ein erfindungsgemäßes Beispiel eines Troges längs Linie 9-9 in Figur 26.

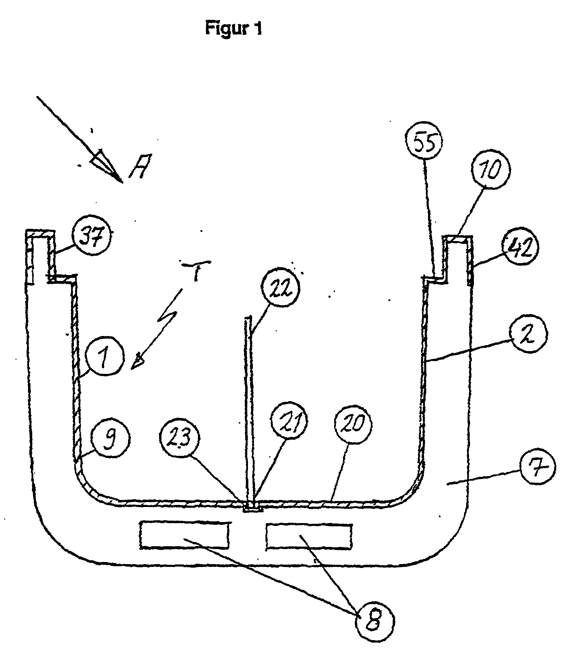

Ein Ausführungsbeispiel eines erfindungsgemäßen Kabelkanals umfaßt, wie in Fig. 1 dargestellt, einen U-förmig ausgebildeten, als Ganzes mit T bezeichneten Trog, welcher zwei, die Schenkel des U bildende Seitenwandungen 9 aufweist, welche mit ihren unteren Längsseiten in einen Trogboden 20 übergehen, welcher seinerseits den Mittelschenkel des U bildet.

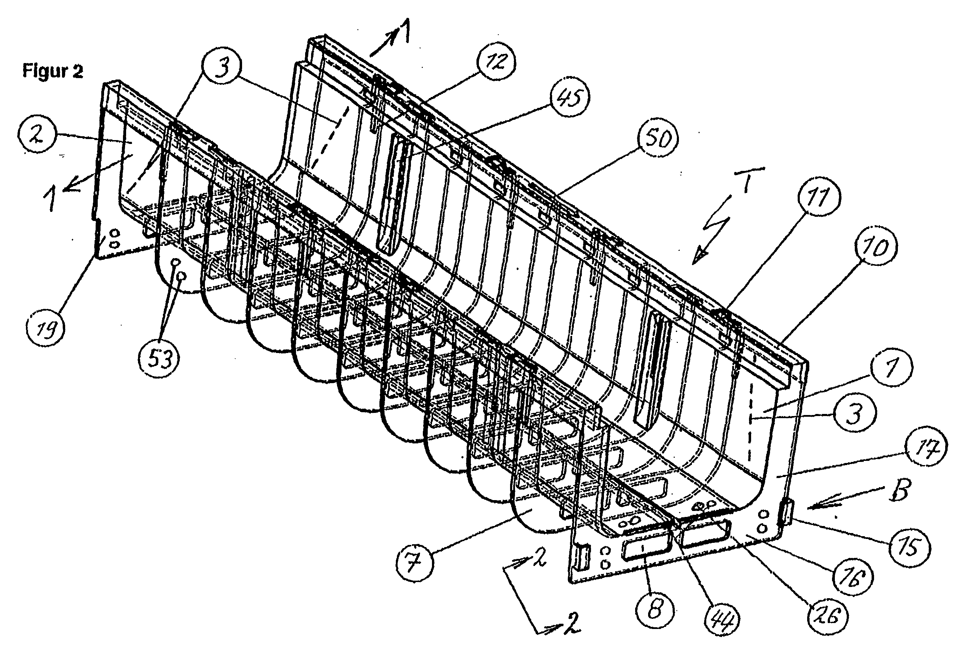

Die Trogaußenwandungen 2 weisen angeordnete Querrippen 7 auf, welche im wesentlichen senkrecht auf diesen 2 stehen und von diesen ausgehend sich über eine im wesentlichen konstante Breite nach außen erstrecken. Die Querrippen 7 verlaufen von der ungefähr vertikal nach unten verlängerten, verbreiterten Trogoberkante 10 über die gesamte Höhe der Trogseitenwandungen 9 und umschließen den Trogboden 20 an dessen Unterseite zumindest teilweise, wobei die Querrippen 7 ihrerseits vorzugsweise Aussparungen 8 aufweisen und somit den Wasserabfluß in Längsrichtung der Tröge ermöglichen (Fig. 1, 2).

Die Querrippen 7 sind vorzugsweise einstückig an die Trogaußenwandungen 2 und den Trogboden 20 angeformt und bilden in ihrem unteren Bereich am Trogboden 20 bei beispielsweise ungefähr horizontalem Verlauf eine Auflagefläche, mit der sich der Trog auf dem Untergrund abstützt (Fig. 2).

Der Boden 20 weist eine ungefähr mittig desselben in einer Längsrichtung des Kanals verlaufende Einkerbung 21 auf, in welche Trennelemente 22 einsteckbar sind, die den Trog T in Teilräume unterteilen, die sich über dem Trogboden 20 bilden (Fig. 1).

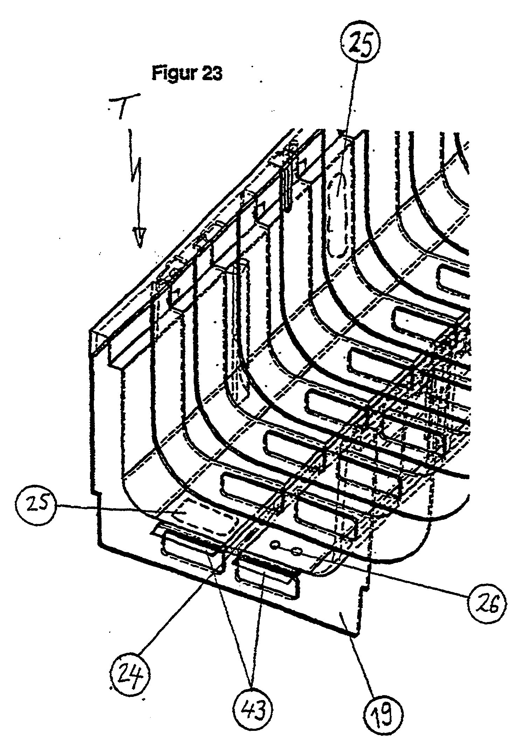

In diesen Teilräumen besteht die Möglichkeit, unterschiedliche Kabel zu verlegen. Wie aus Fig. 23 hervorgeht, sind in der im Trogboden 20 in einer Längsrichtung verlaufenden Einkerbung 21 zweckmäßigerweise Durchbrüche zur Entwässerung 24 vorgesehen. Lage, Anzahl, Form und Durchmesser der Durchbrüche 24 sind vorteilhafterweise so zu wählen, daß ein Wasserstau im Trog T vermieden wird.

Wie in Fig. 23 anhand eines ausführungsgemäßen Beispiels des Troges dargestellt, weisen die Tröge zweckmäßigerweise sowohl im Boden 20 als auch in den Trogwandungen 9 mindestens eine beispielsweise perforierte Ausbruchstelle 25 auf.

Diese Ausbruchstelle 25 ist vorzugsweise dann zu öffnen, wenn eine nachträgliche Einbringung von Kabeln erforderlich ist. Form und Durchmesser der Ausbruchstelle 25 ist vorteilhafterweise am Durchmesser und der Anzahl der nachträglich einzubringenden Kabel zu orientieren. Die Lage der Ausbruchstelle 25 im Boden 20 bzw. den Trogwandungen 9 ist zweckmäßigerweise ungefähr mittig zwischen den Querrippen 7.

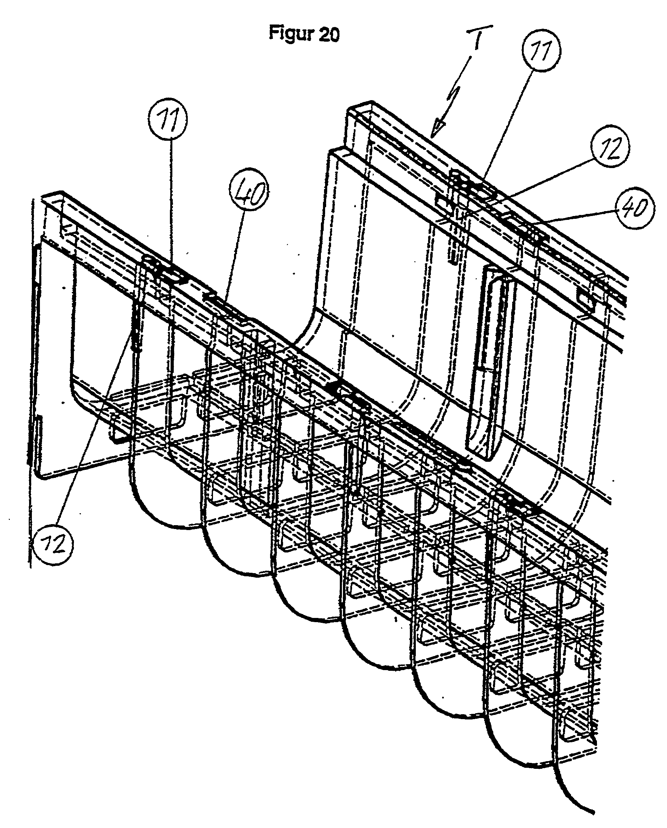

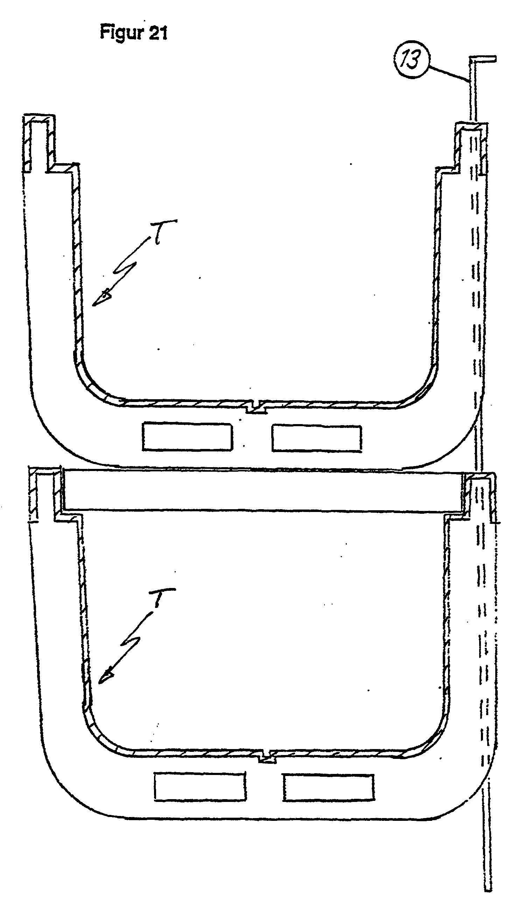

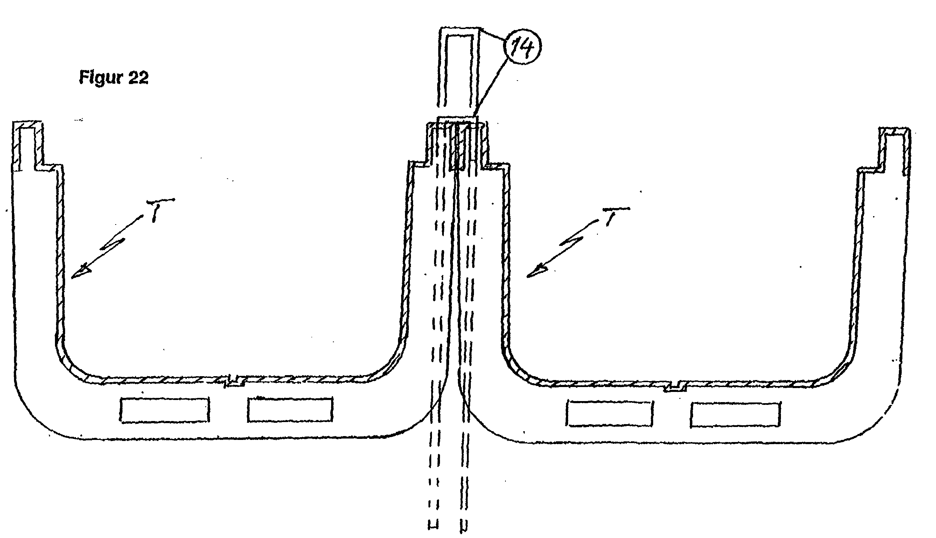

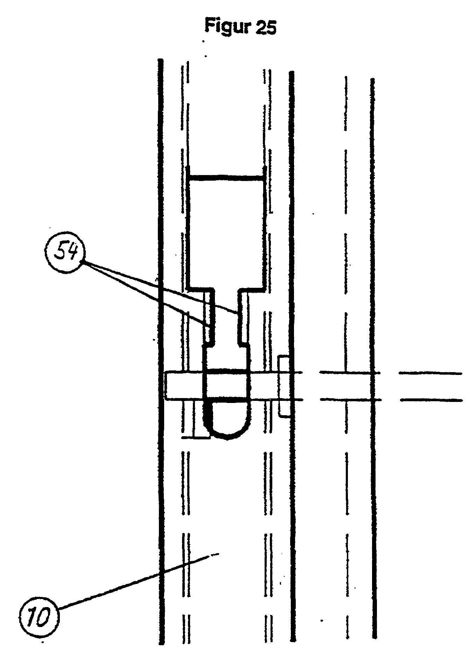

Zur Fixierung des Troges im Erdreich bzw. zur Verbindung nebeneinander (Fig. 22) oder übereinander (Fig. 21) liegender Tröge sind an mindestens einer verbreiterten Trogoberkante 10 vorzugsweise mehrere Öffnungen mit Sicherungsclips 11 (Fig. 20, 25) sowie beispielsweise direkt darunter an mehreren Querrippen 7 ungefähr vertikal verlaufende Führungshilfen 12 (Fig. 20) z.B. Leisten angebracht. Durch diese Mittel können Befestigungselemente 13 bei beispielsweise übereinander liegenden Trögen T oder bei einer Notwendigkeit zur Fixierung eines auf der Erde liegenden Troges T zur Anwendung kommen. Sollen nebeneinander liegende Tröge T verbunden werden, so kommen ebenfalls Befestigungselemente 14 zum Einsatz (Fig. 22).

Beide Befestigungselemente 13, 14 werden vorzugsweise von oben zunächst durch die Öffnungen in der verbreiterten Trogoberkante 10, dann entlang den Führungshilfen 12 und anschließend ins Erdreich gedrückt. Die Befestigungselemente 13 können mit ihren beispielsweise abgewickelten oberen Enden vollständig durch die Öffnungen mit Sicherungsclips 11 (Fig. 20) bzw. durch deren innere Enden 54 (Fig. 25) gedrückt werden. Da die Befestigungselemente einen etwas höheren Durchmesser besitzen als der Abstand zwischen den inneren Enden der Sicherungsclips, rasten sie unterhalb dieser Enden ein und sind somit vollständig versenkt.

Ein Hochdrücken der Befestigungselemente bei z.B. Frost wird weitestgehend verhindert, so daß auch die Verletzungs- und Stolpergefahr ausgeschlossen ist.

Die vertikale Verlängerung 42 (Fig. 1) der verbreiterten Trogoberkante 10 dient einerseits als Schutz vor Verschmutzung der Führungshilfen 12 und andererseits, durch den vorzugsweise vorhandenen Abstand zur Trogaußenwand 2, zur sicheren und vollständigen Aufnahme der Befestigungselemente 13 in den Öffnungen mit Sicherungsclips 11.

Durch die sinnvolle Anordnung der Öffnungen mit Sicherungsclips 11 und der Führungshilfen 12 außerhalb des Troginneren muß weder der Deckel zum Entfernen der Befestigungselemente 13, 14 geöffnet werden, noch kommen die Kabel im Troginneren mit den beispielsweise metallischen Befestigungselementen 13, 14 in Berührung.

Bei dieser Verlegeform muß selbstverständlich auch ein seitliches Verrücken der Tröge verhindert werden.

Hierbei sind insbesondere die an der verbreiterten Trogoberkante 10 (Fig. 1, 2) eines erfindungsgemäßen Beispiels vorgesehenen Öffnungen mit Sicherungsclips 11 (Fig. 2, 20) sowie die darunter befindlichen Führungshilfen 12, die beispielsweise an den Querrippen 7 (Fig. 2, 20) angebracht sind, von besonderem Nutzen.

Durch die Öffnungen können entsprechende Befestigungselemente 13 in das Erdreich eingeschlagen und der Trog somit fixiert werden. Die Befestigungselemente 13 sind in diesem Teil zweckmäßiger Weise kürzer zu wählen, als bei der in Fig. 21 dargestellten Variante.

Da die Führungshilfen 12 vorzugsweise an den Querrippen 7 außerhalb des Troges angebracht sind, kommen die Befestigungselemente 13, 14 (Fig. 21, 22) mit den im Trog verlegten stromführenden Kabeln nicht in Berührung, so daß Kurzschlüsse ausgeschlossen sind.

Sollte der oberirdisch verlegte Kabelkanal seitlich verschoben werden müssen, kann das Befestigungselement 13, auch bei bereits verlegten Kabeln, leicht aus dem Erdreich entfernt werden und dann erneut eingeschlagen werden.

Diese Befestigungsmethode verhindert auch das unerwünschte selbständige Anheben der Träge z.B. bei Frost.

Außerdem wird durch diese Vorrichtung bei Verwendung der entsprechenden Befestigungselemente auch die Verbindung von nebeneinander (Fig. 22) und übereinander (Fig. 21) liegenden Trögen ermöglicht.

Zur Verbindung von hintereinander liegenden Trögen besitzt der Trog vorzugsweise an einer seiner beiden Endrippen 17 ein Schloßsystem 15 (Fig. 2).

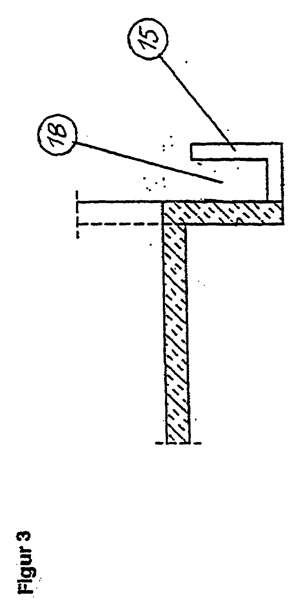

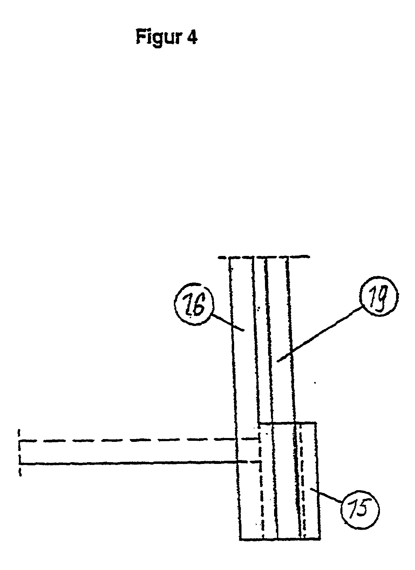

Hierzu weist dieses Trogende 16 z.B. in seinem unteren Bereich an beiden Außenseiten jeweils ein Schloßsystem 15 auf, welches gebildet ist durch einen sich, ausgehend von der Endrippe 17, erstreckenden hakenähnlichen Übergriff, so daß zwischen einer Stirnseite der Endrippe 17 und dem hakenförmigen Übergriff (Fig. 3) ein Zwischenraum 18 verbleibt, in welchen die andere, einen derartigen Übergriff nicht aufweisende Endrippe 19 (Fig. 2) des nächstfolgenden Troges einführbar ist (Fig. 4).

Der Übergriff kann, wie in Fig. 3 dargestellt, so ausgebildet sein, daß der Zwischenraum 18 nach unten offen ist.

Um eine sinnvolle Verbindungsmöglichkeit zwischen zwei hintereinander liegenden erfindungsgemäßen Trögen zu schaffen, wurde ein Schloßsystem 15 (Fig. 2, 3, 4) konzipiert, das durch eine spezielle, in ihrer Höhe, gemessen an der Seitenhöhe des Troges variable Endrippenausprägung an nur einem Trogende 16 (Fig. 2) charakterisiert ist.

Betrachtet man die Endrippe 17 (Fig. 2) einer Trogseite von oben, so kann das Schloß 15 (Fig. 2, 3) als liegendes U-Profil bezeichnet werden, da es nach oben, unten und zum Trog hin geöffnet ist.

Die Öffnungsbreite 18 (Fig. 3) des Schloßsystems 15 ist vorzugsweise größer als die Dicke der einzuführenden Endrippe 19 (Fig. 2) des nächsten Troges.

Die Öffnungstoleranzen im Schloß gewährleisten eine gewisse Flexibilität für horizontale und vertikale Richtungsänderüngen bei in das Schloß 15 eingehängten Trögen. Die Flexibilität kann noch erhöht werden, wenn die Endrippe 19 nur auf einer Seite in das Schloß 15 eingeführt wird.

Dies hat den Vorteil, daß der Verlauf der Kabelkanäle auch polygonartig erfolgen kann.

Die dreiseitige Öffnung des Schloßsystems 15 (Fig. 3) ist besonders vorteilhaft, da die Ablagerung von Sand und Steinen weitgehend verhindert wird. Sollten sich doch kleine Ablagerungen bilden, können diese dann leicht entfernt werden.

Der besondere Vorteil dieses speziellen Schloßsystems liegt in der Möglichkeit des Verzichts auf zusätzliche, eigenständige Verbindungselement (z.B. Stecker) und Werkzeuge zu deren Entfernung.

Ein weiterer Vorteil besteht in der leichten Austauschbarkeit einzelner, z.B. beschädigter Kabelkanäle aus dem verlegten Verbund.

Eine sinnvolle Ergänzung zum Schutz gegen das Einwachsen von Pflanzen zwischen zwei hintereinander verlegten Trögen bildet beispielsweise eine erfindungsgemäße Verlängerung 43 des Trogbodens beispielsweise über dessen gesamte Breite in vorzugsweise ungefähr horizontaler Richtung an einer Endrippe 19 ohne Schloß 15, die ihre Komplementärin am anderen Ende des folgenden Troges 44 findet (Fig. 2, 23).

Im Trogboden 20 an der Endrippe 19 eines Troges ist zweckmäBigerweise eine ungefähr horizontale Verlängerung 43 (Fig. 23) vorzugsweise über die gesamte Breite des Troges angebracht, die ihre Komplementärin 44 am Trogende 16 (Fig. 2) des nächsten Troges findet. Die Einkerbung im Trogboden 21 läuft zweckmäßigerweise auch durch diese Verlängerung 43 (Fig. 23).

Durch diese ineinandergreifenden Teile wird das Einwachsen von Pflanzen in das Troginnere wirksam verhindert.

Aus der Konstruktion und Anordnung des Schloßsystems 15 (Fig. 2) sowie der Verlängerung des Trogbodens 43 (Fig. 23) ergibt sich automatisch die richtige Anordnung zweier hintereinander zu verlegender Tröge.

Sowohl die Konstruktion des Schloßsystems 15 als auch die Verlängerung des Trogbodens 43 bestimmen die Reihenfolge und damit die Richtung in der die Tröge nacheinander sinnvoll zu verlegen sind. Als zusätzliche Arbeitserleichterung sind beispielsweise auf der verbreiterten Trogoberkante 10 Richtungspfeile 50 angebracht (Fig. 2).

Eine weitere Erleichterung bei der Verlegung des Kabelkanalsystems bieten die beispielsweise auf verbreiterten Trogoberkante 10 angebrachten Pfeile 50, die die Verlegerichtung nochmals anzeigen (Fig. 2).

Die im Trogboden 20 (Fig. 1) ungefähr in Längsrichtung verlaufende Einkerbung 21 (Fig. 1) dient, falls nötig, der Befestigung von Trennelementen 22 (Fig. 1) und ermöglicht somit eine getrennte Führung der Kabelstränge, wodurch die Übersichtlichkeit und der spätere Zugang zu bestimmten Kabeln beträchtlich erhöht wird.

Durch die Verwendung beispielsweise mehrerer Trennelemente 22, in einem Trog in Reihe ist sichergestellt, daß die Trennelemente vorzugsweise bei allen verwendeten Norm- und Sonderteilen einsetzbar sind.

Darüber hinaus ist es auch möglich, die Trennelemente 22 in individuell nachträglich veränderte Tröge einzubauen.

Vorzugsweise im Boden 23 der Einkerbung 21 (Fig. 1) befinden sich Durchbrüche 24 (Fig. 23), die den Abfluß eventuell eingedrungenen Wassers ermöglichen.

An den Trogwandungen 9 und am Boden des Troges 20 sind beispielsweise perforierte Ausbruchstellen 25 (Fig. 23) vorgesehen, damit ein nachträgliches Einziehen bzw. der Anschluß weiterer Kabel ohne Bearbeitung des Troges mit Schneidewerkzeugen durch beide Trogwandungen 9 und den Boden 20 möglich ist.

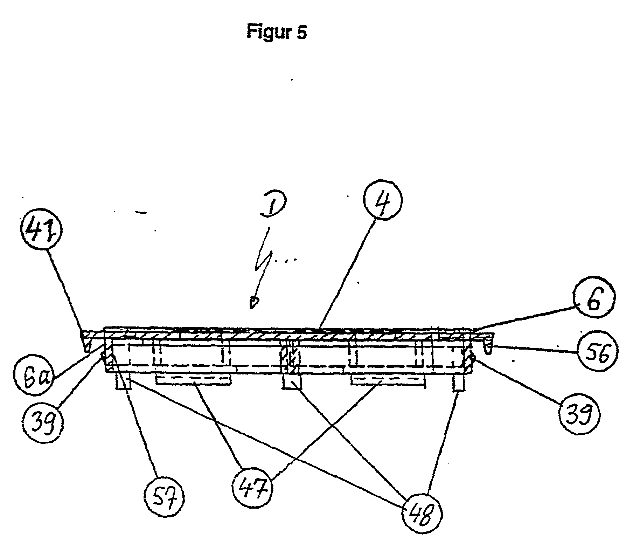

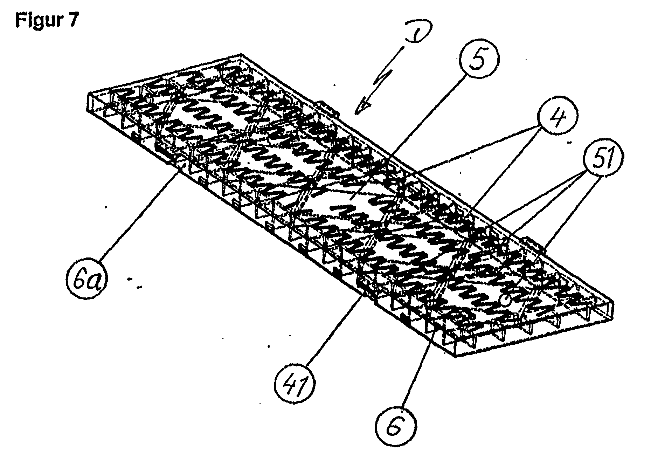

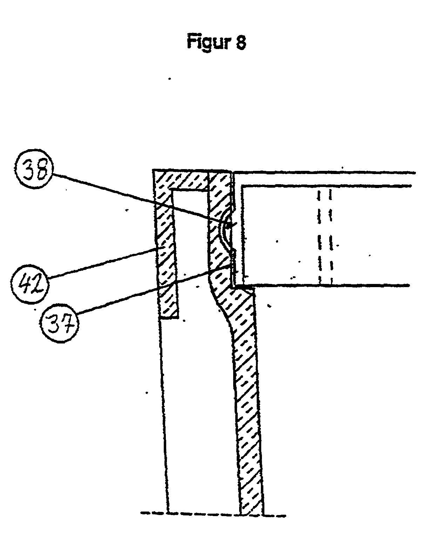

Vorzugsweise ist ein erfindungsgemäßer Deckel (Fig. 5, 6, 7) mit einem Schnappverschlußsystem (Fig. 2, 5, 6, 7, 8) an dem Trog fixiert (Fig. 2, 8). Bei einem erfindungsgemäßen Beispiel eines derartigen Schnappverschlußsystems verläuft parallel und unterhalb der Trogoberkante 10, auf einer oder beiden versetzten Innenwandungen 37 des Troges, nicht unbedingt über dessen gesamte Länge ein konkaver Kreisabschnitt 38 (Fig. 8), der zusammen mit einem oder mehreren konvexen Kreisabschnitten 39 (Fig. 5) an den Außenseiten des Deckels 6a (Fig. 5, 7) das Schnappverschlußsystem bildet.

Die Aussparungen 40 (Fig. 20) in der Verbreiterung der Trogoberkante 10 eines erfindungsgemäßen Beispiels bilden horizontale Auflager für die entsprechenden beispielsweise hakenförmig geformten Profile 41 an den Deckelaußenseiten 6a (Fig. 5, 7).

Die vorzugsweise ungefähr vertikale Verlängerung der Trogoberkante nach unten (Fig. 1, 8) schützt die nicht unbedingt über die gesamte Breite der Trogoberkante 10 verlaufende Aussparung 40 vor Verschmutzungen durch das Erdreich.

Dieses Klammerverschlußsystem (Fig. 5, 7, 20) ist einerseits leicht zu verschließen und auch wieder zu öffnen, andererseits verhindert es wirkungsvoll ein ungewolltes Abheben des Deckels durch äußere Einflüsse wie z.B. den Sog von mit hoher Geschwindigkeit vorbeifahrender Fahrzeuge.

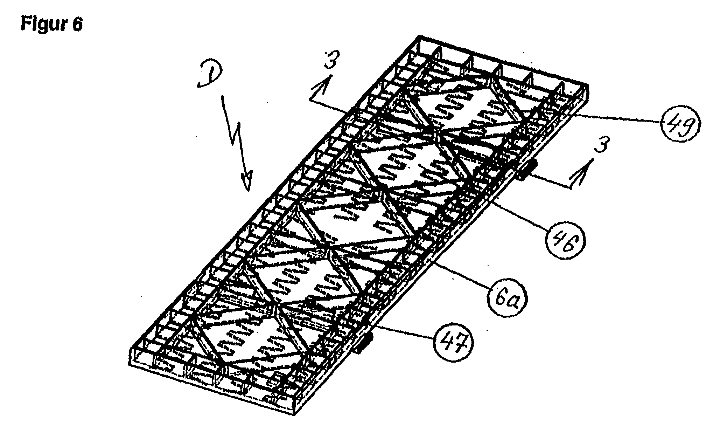

Besonders zweckmäßig erscheint die Aufbewahrungsmöglichkeit des Deckels innerhalb des Troges während der Bau- bzw. Verlegezeiten. Hierzu wurden sinnvollerweise Schienen 45 an der Troginnenwandung 1 angebracht (Fig. 2). Ein erfindungsgemäßes Ausführungsbeispiel des Deckels besitzt an der Deckelunterseite 46 entsprechend geformte Ausprägungen 47, die ein Einhängen des Deckels im Trog leicht und sicher ermöglichen (Fig. 5, 6).

Dieses System verhindert das Wegfliegen der Deckel infolge von Sogwirkungen vorbeifahrender Fahrzeuge.

Das Abbrechen dieser Ausprägungen 47 (Fig. 5) beim Transport und der Lagerung wird beispielsweise durch punktuelle Erhöhungen 48 (Fig. 5) an der Deckelunterseite 46 auf mindestens die gleiche Höhe wie die Ausprägungen 47 wirksam verhindert (Fig. 6).

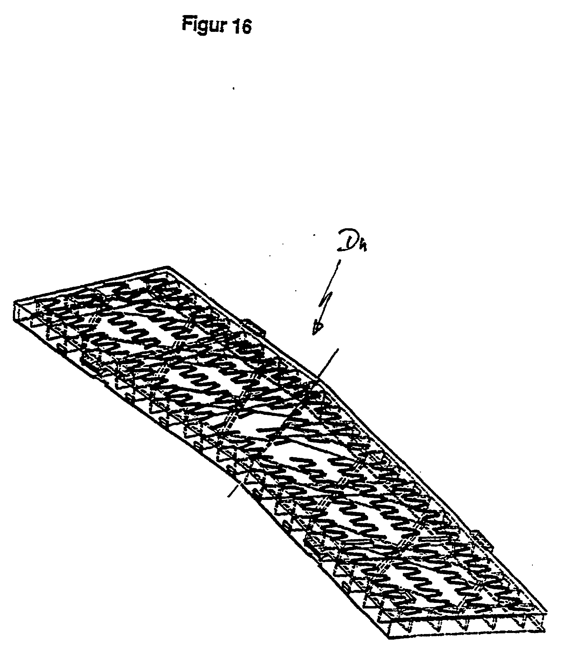

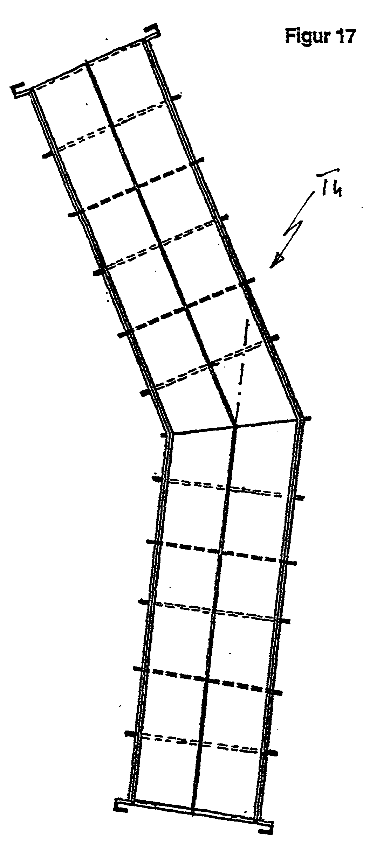

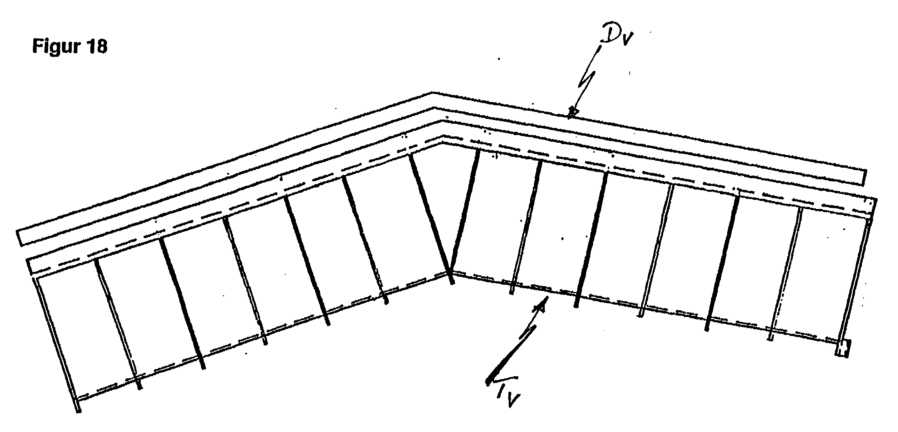

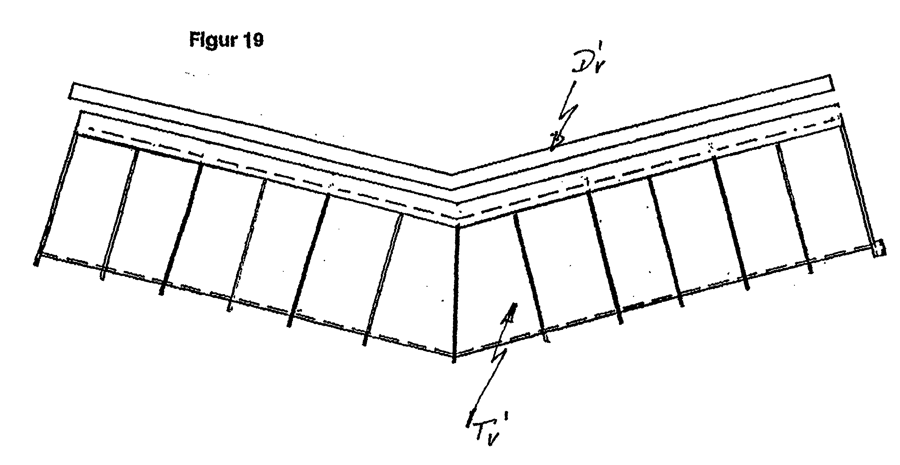

Für die horizontal (Fig. 17) und vertikal (Fig. 18, 19) abgewinkelten Tröge sind entsprechende Deckelvarianten (Fig. 16) als Sonderteile konzipiert und bilden somit ein System.

Sollten besondere Gegebenheiten eine individuelle Gestaltung der Deckelteile erfordern, so kann eine Verkürzung leicht anhand der auf dem Deckel befindlichen Trennführungslinien 4 vorgenommen werden (Fig. 7).

Um einen Wärmestau im Trog zu verhindern, sind zweckmäßigerweise im Deckel Belüftungsöffnungen 51 zur Verbesserung der Luftzirkulation vorgesehen (Fig. 7).

Die Unterseite des Deckels weist vorteilhafterweise eine Rippenstruktur 49 (Fig. 6) auf, wodurch die Stabilität des Deckels entsprechend der vorgegebenen Druckbelastung erreicht wird.

Gleichzeitig kann die Wanddicke gering gehalten werden, wodurch der Materialeinsatz und das Gewicht des Deckels niedrig gehalten wird und dessen Belastbarkeit verbessert wird.

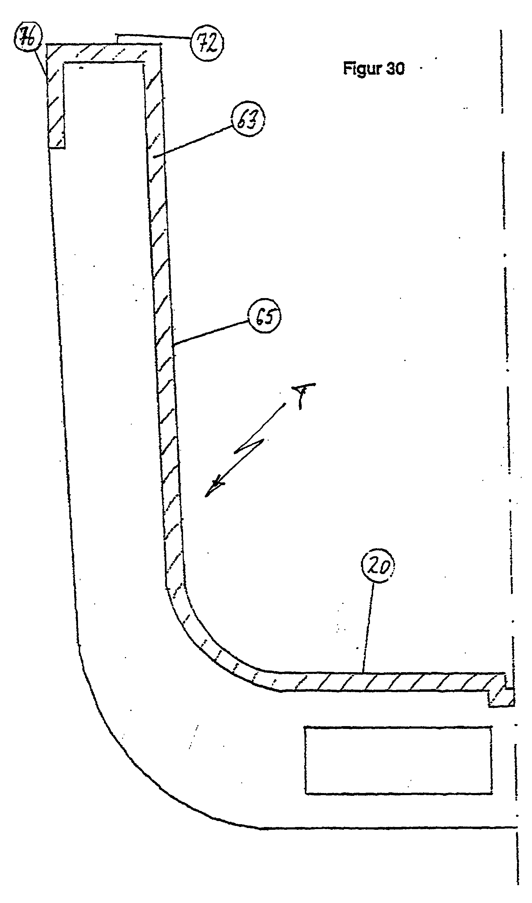

Ein weiteres ausführungsgemäßes Beispiel eines Kabelkanals besitzt ausschließlich ungefähr vertikal aus dem Trogboden 20 hervorgehende Trogwandungen 63 (Fig. 30).

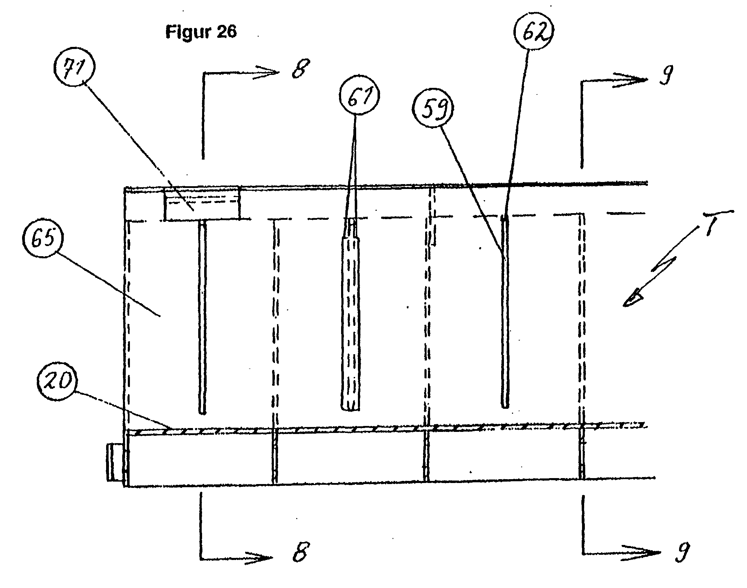

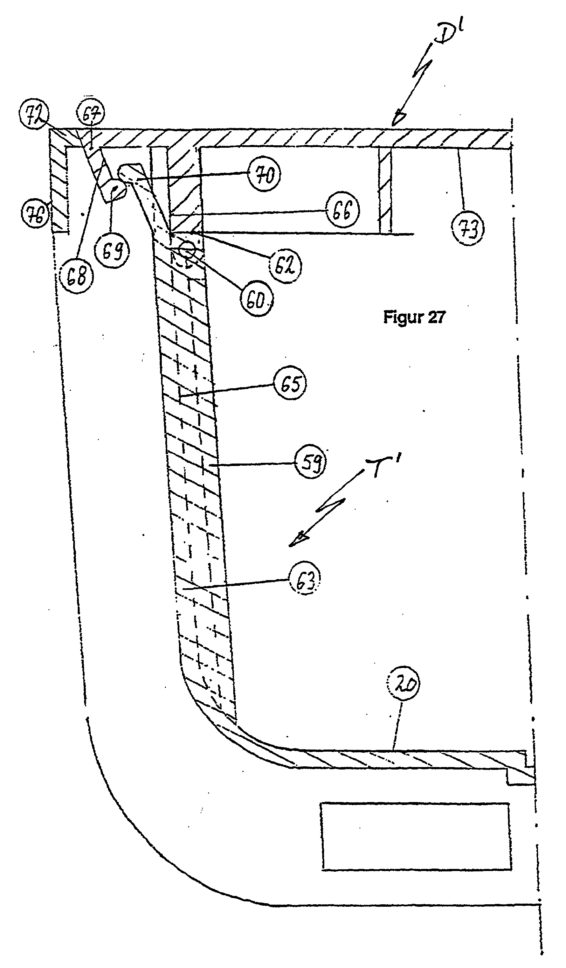

Bei dieser Variante wird der Deckel auf den Troginnenwandungen zunächst ungefähr vertikal aus dem Bogen des U-Profils hervorgehenden, und dann noch unterhalb der Trogoberkante 72 ungefähr horizontal bis an die Troginnenwand 65 verlaufenden Ausprägungen 59 (Fig. 26) aufgelegt. Gleichzeitig rasten die Befestigungsmittel 68 an der Deckelaußenseite 66 form- und kraftschlüssig in die Aussparungen 71 (Fig. 26) der Verbreiterung der Trogoberkante 72 und die in diesem Bereich spezielle geformte Trogwand 70 ein und geben dem Deckel festen und sicheren Halt gegen beispielsweise Sogwirkungen vorbeifahrender Fahrzeuge (Fig. 27).

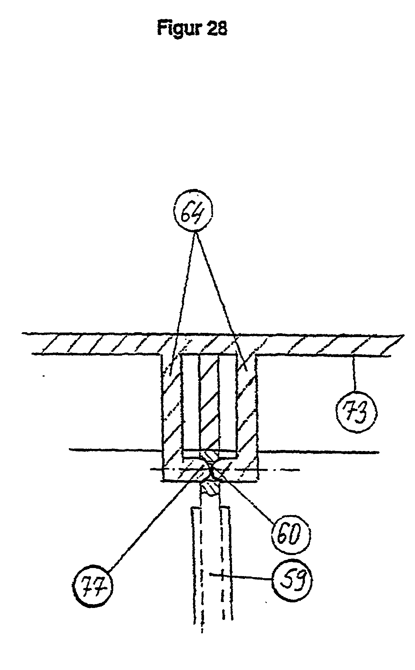

Zweckmäßigerweise sind beispielsweise an der Unterseite des Deckels 73 Befestigungsmittel 64 angebracht, die bei geschlossenem Deckel in die Durchbrüche 60 im oberen Bereich der Ausprägungen 59, die an den Troginnenwandungen 65 angebracht sind, eingerastet sind (Fig. 28).

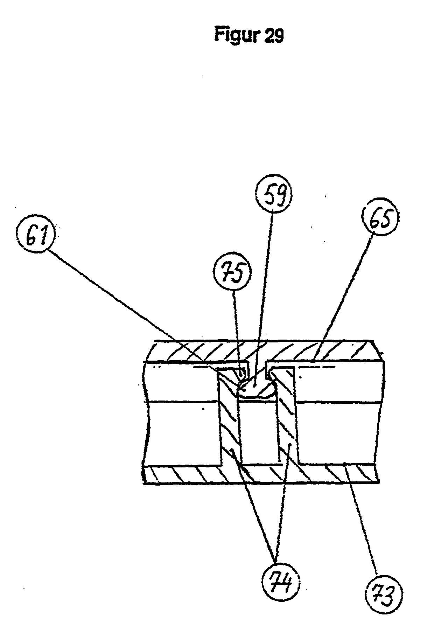

Ein weiterer erfindungsgemäßer Vorteil liegt in der Befestigungsmöglichkeit der Deckel innerhalb der Tröge, z.B. während Bauphasen, damit ein Wegfliegen der Deckel durch Sogwirkung unterbunden wird (Fig. 29).

Hierzu wurden sinnvollerweise ebenfalls z.B. an der Unterseite des Deckels 73 zapfenähnliche, mit Auswölbungen 75 an ihren Innenseiten versehene Ausprägungen angebracht, die das Einhängen des Deckels an den entsprechend geformten Verbreiterungen 61, der an den Troginnenwandungen 65 angebrachten Ausprägungen 59, ermöglichen (Fig. 29).

Mindestens eine Troginnenwandung 1 weist im oberen Bereich einen vorzugsweise horizontal und in Richtung der Trogaußenwandungen 2 verlaufenden Versatz auf, der eine Auflagerfläche 55 (Fig. 1) für ein, in Fig. 5, 6, 7 näher beschriebenes ausführungsgemäßes Beispiel eines innenliegenden Deckels, bildet. Oberhalb der Auflagerfläche besitzt die versetzte Troginnenwandung 37 (Fig. 1) ungefähr mittig eine vorzugsweise konkav geformte, nicht unbedingt über die gesamte Länge des Troges verlaufende Einbuchtung 38 (Fig. 8). Diese Einbuchtung 38 dient der form- und kraftschlüssigen Verbindung mit der entsprechend geformten Ausbuchtung 39 des Deckels (Fig. 5), wobei die Ausbuchtungen 39 an der Deckelaußenseite 6a ungefähr mittig verlaufen und sich nicht zwangsläufig über die gesamte Länge des Deckels erstrecken.

Die Höhe der versetzten Troginnenwandung 37 entspricht zweckmäßigerweise der Höhe der Deckelaußenseite 6a, damit kein Höhenunterschied zwischen der oberen Deckelaußenkante 6 und der versetzten Troginnenwandung 37 der verbreiterten Trogoberkante 10 entsteht (Fig. 8).

In mindestens einer der verbreiterten Trogoberkanten 10 befinden sich vorzugsweise mehrere Aussparungen 40 (Fig. 20) zur ebenfalls form- und kraftschlüssigen Aufnahme von in zweckmäßigerweise gleicher Anzahl an der Deckelaußenseite 6a angebrachten beispielsweise hakenförmigen Profilen 41 (Fig. 5).

Diese Profile 41 laufen zunächst ungefähr horizontal zur Deckeloberseite 5 um dann ungefähr vertikal nach unten weitergeführt zu werden. Zweckmäßigerweise ist die Innenseite des ungefähr vertikal nach unten verlaufenden Abschnitts 56 beispielsweise konisch angeformt, um ein leichtes Einrasten in die Aussparung 40 in der verbreiterten Trogoberkante 10 zu gewährleisten (Fig. 5).

In Verbindung mit dem oben erläuterten Schnappverschlußsystem an der Deckelaußenseite 6a bzw. der versetzten Troginnenwandung 37 oberhalb der Auflagerfläche 55 wird somit eine äußerst sichere Verbindung der beiden Teile gewährleistet, so daß auch der Sog vorbeifahrender Fahrzeuge den Deckel nicht abheben kann.

Die Deckelunterseite 46 ist in Fig. 6 dargestellt, wobei zwischen längs, quer und vorzugsweise diagonal verlaufenden Rippen 49 unterschieden wird.

Die Rippen 49 sind vorzugsweise einstückig an die Deckelunterseite 46 und die Innenseite des Deckelrandes 57 angeformt. Sinnvollerweise befinden sich z.B. an der Deckelunterseite 46 mehrere punktuelle Erhöhungen 48 (Fig. 5).

Diese dienen bei Transport und Lagerung der Deckel auf ihrer durch die Rippen 49 charakterisierten Unterseite 46 als Schutz für die, mindestens einzelnen, an den Rippen 49 an der Deckelunterseite 46 zweckmäßigerweise angeformten, hakenartigen Ausprägungen 47 (Fig. 5, 6).

Diese Ausprägung 47 ermöglicht zweckmäßigerweise ein Einhängen der Deckel in eine an mindestens einer Troginnenwandung 1 angebrachten sinnvollerweise formschlüssigen Schiene 45 (Fig. 2).

Diese Vorrichtungen sind besonders zweckmäßig zur Aufbewahrung der Deckel bei geöffneten Trögen, also z.B. in Bauphasen.

Ein unerwünschtes Wegfliegen der Deckel durch Sogwirkung vorbeifahrender Fahrzeuge wird somit verhindert.

Auf der Deckeloberseite 5 sind zweckmäßigerweise, wie aus Fig. 5 und 7 ersichtlich, vorzugsweise halbrund angeformte Trennführungslinien 4 zur manuellen Verkürzung des Deckels angebracht. Die Trennführungslinien 4 verlaufen in beliebig festlegbaren Winkeln und beliebigem Abstand untereinander. Ein positiver Nebeneffekt der Trennführungslinien 4 besteht darin, daß sie zweckmäßigerweise die Rutschgefahr beim Begehen des Deckels eliminieren.

In Fig. 7 werden die in einem ausführungsgemäßen Beispiel eines Deckels zweckmäßigerweise befindlichen Entlüftungsöffnungen 51 dargestellt. Der Durchmesser, die Form, die Lage und die Anzahl der Entlüftungsöffnungen 51 ist sinnvollerweise so zu wählen, daß ein Wärmestau im verschlossenen Trog vermieden wird. Die Entlüftungsöffnungen sollten zweckmäßigerweise nicht direkt über einer Rippe 49 liegen.

Eine zusätzliche sinnvolle Funktion der Entlüftungsöffnungen 51 ist darin zu sehen, daß bei geeigneter Größe der Öffnungen auch mit entsprechenden Werkzeugen in die Öffnungen gegriffen werden kann und somit der Deckel mühelos vom Trog abgehoben werden kann.

Die Verlegungsmöglichkeit der Kabelkanäle in aufgeständerter Form wird insbesondere durch entsprechende Bohrungen 26 im Trogboden 20 sichergestellt (Fig. 2, 23).

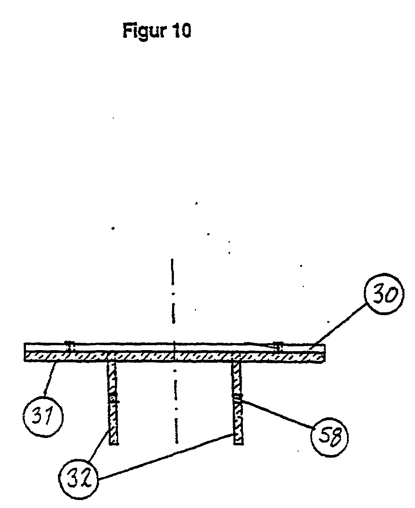

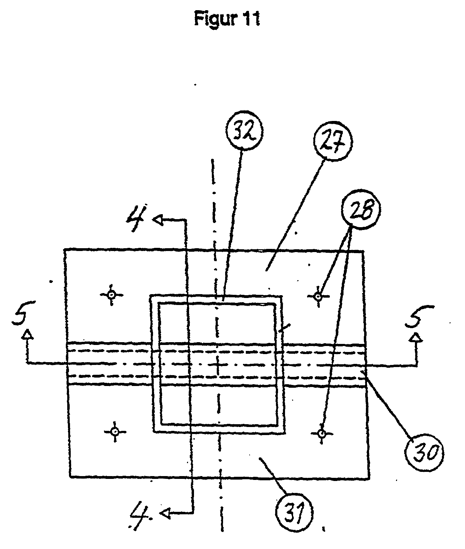

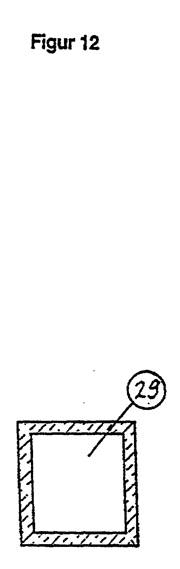

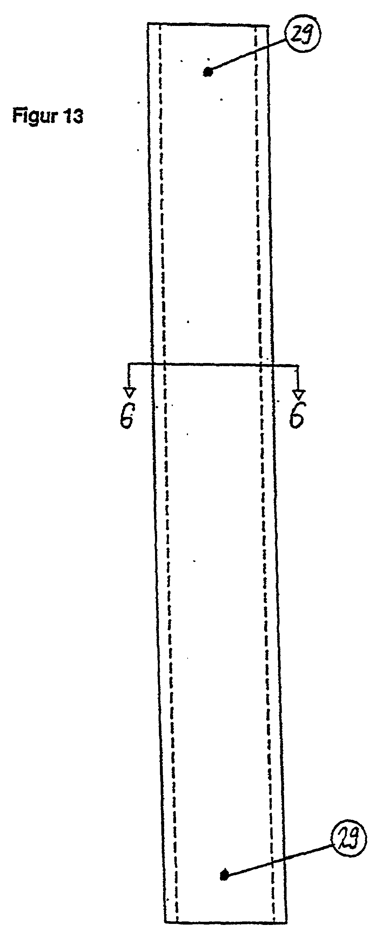

Durch diese Bohrungen 26 wird mit Hilfe von Steckelementen (wie z.B. Bolzen) eine Verbindungsmöglichkeit mit einem Zusatzteil 27 mit entsprechenden Bohrungen 28 (Fig. 10, 11) geschaffen, wobei das Zusatzteil 27 ein Verbindungselement zum eigentlichen Ständer 29 (Fig. 12, 13) darstellt und eine stabile Verlegung der Kabelkanäle ermöglicht.

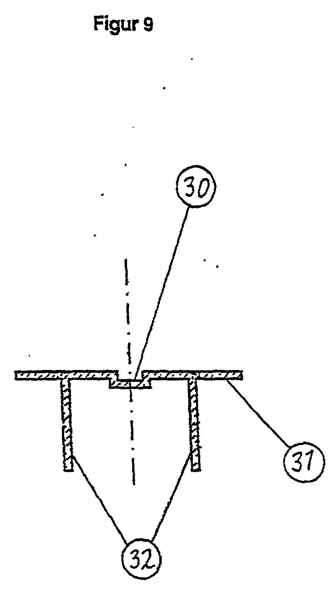

Das Zusatzteil 27 in Fig. 9 besitzt vorzugsweise in der Mitte eine querlaufende Einkerbung 30, die eine passgenaue Aufnahme der Endrippen 17, 19 (Fig. 2) zweier Tröge ermöglicht und trotzdem der vorgegebenen Streckenführung als Polygonlinie folgen kann.

Die Verbindung zum Ständer 29 erfolgt beispielsweise durch ein an der Unterseite 31 des Zusatzteils 27 befindliches Profil 32 (Fig. 9, 10, 11), das auf den Ständer 29 aufgesetzt wird. Die Verbindung der beiden Teile erfolgt beispielsweise durch weitere Steckelemente.

Der Ständer 29 (Fig. 12, 13) ist zweckmäßigerweise in seiner Form der Form des Profils 32 (Fig. 9, 10, 11) an der Unterseite 31 des Zusatzteils 27 angepaßt.

Die vieleckige Form wird vorzugsweise dann zur Anwendung kommen, wenn eine nicht drehbare Verbindung mit dem Zusatzteil bei der Montage erforderlich ist.

Sollte bei der Montage ein nachträgliches Drehen des Zusatzteils zur polygonförmigen Verlegung notwendig sein, so wird vorzugsweise ein Rundprofil eingesetzt.

Der Ständer 29 wird aus Gründen der Gewichts- und Materialersparnis vorzugsweise als Hohlprofil hergestellt, was auch vorteilhafterweise zur Verbesserung seiner statischen Eigenschaften führt.

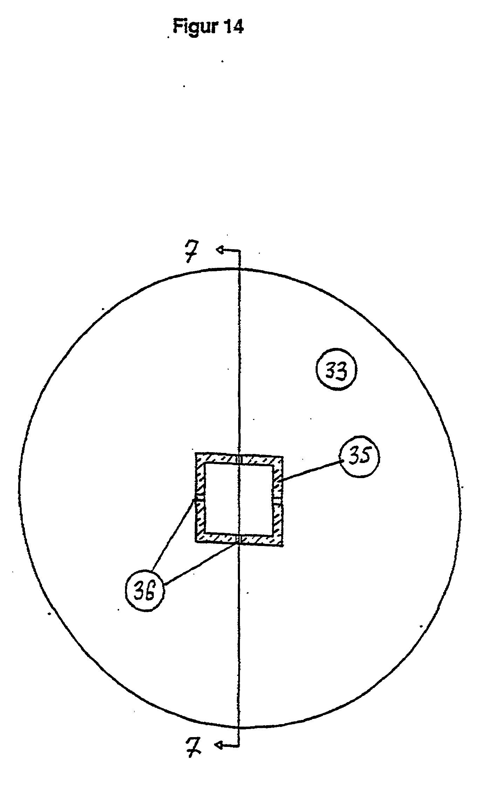

Die Verankerung der Ständer 29 im Erdreich erfolgt beispielsweise mit Hilfe eines Ständerfußes 33 (Fig. 14), dessen Grundfläche eine beliebige Form aufweist.

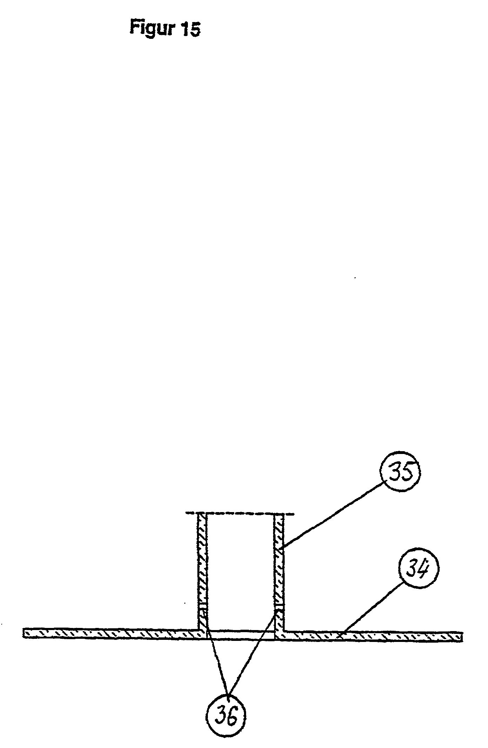

Auf der Oberseite 34 dieser als Grundfläche dienenden Platte 33 befindet sich ein zweckmäßigerweise der Ständerform entsprechendes Profil 35 mit Bohrungen 36, in das der Ständer 29 eingesetzt wird(Fig. 14, 15). Die Verbindung der beiden Teile erfolgt beispielsweise durch weitere Steckelemente.

Nach dem Einsetzen des Ständers 29 mit dem entsprechenden Ständerfuß 33 in ein dafür ausgehobenes Loch wird dieser z.B. mit Erde verfüllt und bietet dem Ständer 29 sicheren Halt.

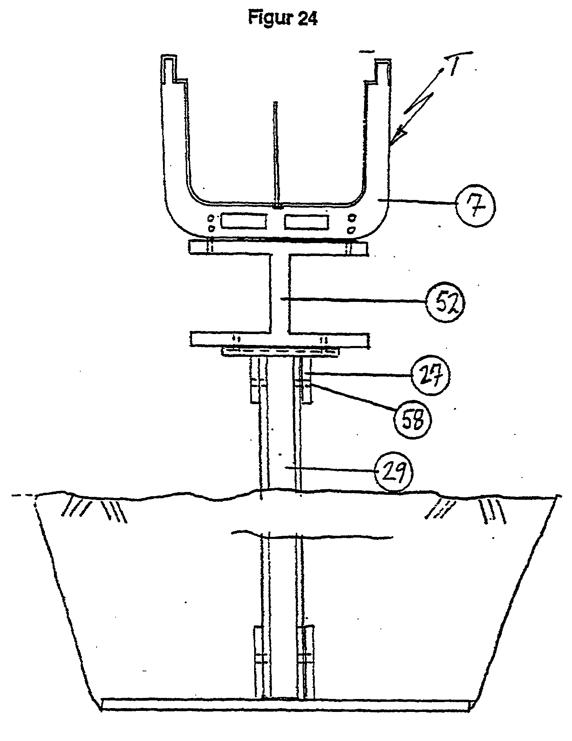

Bei Verwendung eines Trägerprofils 52 (Fig. 24), das beispielsweise die Form eines Doppel-T-Trägers haben kann, lassen sich leicht größere Distanzen bei einer geringeren Ständerzahl überbrücken. Die Verbindung der bereits gesetzten Ständer 29 mit dem Zusatzteil 27 sowie dem Trägerprofil 52 erfolgt beispielsweise ebenfalls durch Steckelemente (Fig. 24).

Anschließend wird das Trägerprofil 52 z.B. durch Winkelprofile mit Bohrlöchern und Steckelementen mit den Bohrlöchern 53 in den Querrippen 7 (Fig. 2) am Trogboden 20 verbunden (Fig. 24).

Für eine aufgeständerte Verlegeform von Trögen T befinden sich im Trogboden 20 (Fig. 2) Bohrungen 26 zur Aufnahme von beliebigen Steckelementen zwischen Trog und Zusatzteil 27, daß zweckmäßigerweise entsprechend angeordnete Bohrungen 28 aufweist (Fig. 11). Durch diese Bohrungen 26, 28 können vorzugsweise entsprechende Bolzen, Schrauben, Spreiznieten o.ä. gesteckt werden, damit eine sichere Verbindung mit dem Zusatzteil 27 kraftschlüssig gewährleistet wird, wobei zumindest eine Bewegung in der Vertikalen unterbunden werden muß. Sinnvollerweise befinden sich diese Bohrungen 26 im Endbereich des Troges, damit das Zusatzteil bei relativ geringer Größe zwei durch das Endrippenschloß 15 verbundene Tröge abstützen kann. Form und Größe der Bohrungen im Trogboden 20 sind zweckmäßigerweise so zu wählen, daß auch nach dem Einfügen der im Durchmesser etwas geringeren Steckelemente ein gewisses Maß an horizontaler Bewegungsfreiheit bestehen bleibt, damit durch Temperaturschwankungen entstehende Längenänderungen ausgeglichen werden können.

Eine querverlaufende Einkerbung 30 ist vorzugsweise in der Mitte des Zusatzteils vorzusehen. Die Tiefe der Einkerbung 30 entspricht zweckmäßigerweise mindestens der Höhe der Endrippen 16, 19, gemessen von der Unterseite des Trogbodens, die sie aufnehmen muß (Fig. 9, 10, 11).

Die Breite der Einkerbung 30 ist zweckmäßigerweise so zu wählen, daß sie zumindest genügend Spielraum zur Aufnahme der Endrippen 16, 19 zweier Tröge bietet. Sollte eine Abweichung aus der Horizontalen gewünscht werden, so ist die lichte Breite der Einkerbung sinnvollerweise deutlich größer zu gestalten als die Dicke der beiden Endrippen 16,19 der Tröge.

An der Unterseite 31 des Zusatzteils 27 befindet sich ein beispielsweise viereckiges Profil 32 (Fig. 11), welches vorzugsweise ungefähr vertikal aus diesem hervorgeht und mindestens ein Bohrloch 58 (Fig. 10, 24) zur Verbindung des Zusatzteils mit einem sinnvollerweise entsprechend geformten Ständer 29 (Fig. 12) aufweist. Der Ständerquerschnitt kann beispielsweise kleiner gewählt werden als der Querschnitt des Profils 32 an der Unterseite des Zusatzteils.

Die Höhe des Profils 32 an der Unterseite 31 des Zusatzteils 27, gemessen von der Unterseite 31 des Zusatzteils 27, ist zweckmäßigerweise so zu wählen, daß genügend Platz zur Einfügung von mindestens einem Steckelement in die bestehende Bohrung 58 am Profil 32 des Zusatzteils 27 vorhanden ist.

Der Ständer 29 (Fig. 12) wird zweckmäßigerweise aus Gewichtsgründen als ein mindestens einwandiges Hohlprofil ausgebildet.

Der Ständer 29 wird zweckmäßigerweise an dem des Zusatzteils abgewandten Ende mit einem Ständerfuß 33 (Fig. 14) verbunden. Hierzu besitzt der Ständerfuß 33 ein beispielsweise viereckiges, der Ständerform entsprechendes, Profil 35.

Der Durchmesser des Profils 35 am Ständerfuß 33 (Fig. 14, 15) kann beispielsweise größer gewählt werden als der Durchmesser des Ständers 29.

Die Verbindung von Ständer 29 und Ständerfuß 33 erfolgt zweckmäßigerweise ebenfalls durch Steckelemente in mindestens einem Bohrloch 36 im Profil 35 des Ständerfußes 33.

Die Grundplatte des Ständerfußes 33 kann beispielsweise rund sein.

Zur Überwindung größerer Distanzen, als sie durch die gewählte Troglänge vorgegeben sind, kann auf ein Trägerprofil 52 (Fig. 24), das beispielsweise als Doppel-T-Träger geformt sein kann, zurückgegriffen werden. Das Trägerprofil 52 wird zweckmäßigerweise auf die bereits gesetzten und mit dem Zusatzteil 27 verbundenen Ständer 29 aufgesetzt und durch Bohrlöcher mittels Steckelementen kraft- und formschlüssig verbunden.

Die Verbindung des Trägerprofils 52 mit den Querrippen 7 am Trogboden 20 erfolgt beispielsweise mittels Steckelementen, die durch z.B. Winkelelemente und die Bohrlöcher 53 in die Querrippen gesteckt werden.

Diese Verlegeform kommt vor allem dann zum Einsatz, wenn die Topologie die Verwendung von Ständern nicht zuläßt.

Neben den bisher beschriebenen Normteilen bei Trog T (Fig. 1, 2) und Deckel D (Fig. 5, 6, 7) können auch Sonderteile, wie horizontale Umlenker TU, DU (Fig. 16, 17) und vertikale Absenker Tv, Dv (Fig. 18) und Anheber Tv', Dv' (Fig. 19) eingesetzt werden, um Richtungsänderungen unter Berücksichtigung von Geländestrukturen zu ermöglichen. Diese Sonderteile besitzen die spezielle Eigenschaft, daß sie vorzugsweise bereits in der Herstellung in einem bestimmten Winkel horizontal oder vertikal geknickt wurden, wobei die Öffnung O des Troges Tu, Tv; Tv' grundsätzlich nach oben zeigt.

Sollten besondere Geländestrukturen den Einsatz der oben beschriebenen Normteile und Sonderteile nicht ermöglichen, so können die Tröge zweckmäßigerweise anhand der vom Trogaufleger 55 in beliebig festlegbaren Winkeln ausgehenden Trennführungslinien 3 (Fig. 2) auf der Innenseite 1 bzw. Außenseite 2 der Trogwandungen vor Ort individuell verkürzt werden.

Trennführungslinien 4 befinden sich auf der Oberseite des Deckels 5 (Fig. 7) und verlaufen in beliebig festlegbaren Winkeln von der Deckelaußenkante 6 (Fig. 5, 7).

Die Veränderung der Teile erfolgt durch Schneiden bzw. Sägen entlang der oder parallel zu den Trennführungslinien 3 und 4 nach Maßgabe der Topographie.

Die vorgegebenen Trennführungslinien 3 und 4 verkürzen Planungs- und Ausführungszeiten bei der Verlegung der Kanäle.

Besonders von Vorteil ist eine Auswölbung der Trennführungslinien 4 auf der Oberseite des Deckels 5. Durch den beliebig festlegbaren Abstand der Trennführungslinien 4 zueinander und die Auswölbung nach oben wird die Rutschfestigkeit beim Betreten des Deckels beachtlich erhöht (Fig. 7).

Zur Erzielung einer besseren statischen Belastbarkeit des Troges besitzt dieser an seinen Außenwandungen 2 mehrere, den Trog zumindest teilweise umschließende Querrippen 7 (Fig. 1, 2).

Die Trogwandungen 9 (Fig. 1) können deshalb relativ dünn gehalten werden, wodurch der Materialeinsatz und das Gewicht niedrig gehalten werden. Somit kann der Trog besser und schneller verlegt werden.

Die Aussparungen 8 in den Querrippen 7 ermöglichen insbesondere den Wasserfluß in Längsrichtung zum Trog (Fig. 1, 2). Zusätzliche Hilfsmittel zur Verbesserung der Drainagewirkung unterhalb des Troges können somit entfallen.

Die Querrippen 7 verbessern insbesondere auch die Lagestabilität des Troges in Verlegerichtung, so daß ein Verrutschen der Kanäle beim Einzug der Kabel verhindert wird. Dieses ist insbesondere bei oberirdischer Verlegung von Bedeutung.

Ein weiteres erfindungsgemäßes Beispiel von Trog T' und Deckel D' ist in den Figuren 26 bis 30 dargestellt.

Hierbei verlaufen die Trogwandungen 63 ungefähr vertikal aus dem ungefähr horizontalen Trogboden 20 nach oben um anschließend in eine ungefähr horizontal nach außen verlaufende Verbreiterung der Trogoberkante 72 zu münden und anschließend in einer wieder ungefähr vertikal nach unten verlaufenden Verlängerung 76 der Trogoberkante 72 zu enden (Fig. 27, 30).

Der Deckel D' findet sein ungefähr horizontales Auflager 62 beispielsweise auf den ungefähr von der Biegung des U-Profils ausgehenden an den ungefähr vertikalen Troginnenwandungen 65 vorzugsweise einstückig angeformten, zunächst ungefähr vertikal und später ungefähr horizontal bis an die Troginnenwandung 65 verlaufenden, Ausprägungen 59 und liegt somit zwischen den ungefähr vertikal verlaufenden Trogwandungen 63 (Fig. 26, 27).

Der Deckel D' besitzt zweckmäßigerweise an seiner Außenseite 66 zunächst ungefähr horizontal nach außen und im Anschluß wieder in einem spitzen Winkel nach innen und unten in Richtung der Deckelaußenseite 66 verlaufende Befestigungsmittel 67. An der Innenseite 68 des nach innen und unten verlaufenden Bereichs des Befestigungsmittels 67 ist sinnvollerweise eine Auswölbung 69 angeformt, die eine kraft- und formschlüssige Verbindung mit der im Bereich der Aussparung 71 (Fig. 26) in der Verbreiterung der Trogoberkante 72 mit der in diesem Bereich zweckmäßigerweise komplementär geformten Trogwand 70 sicherstellt (Fig. 27).

Eine zusätzliche Arretierung bilden die beispielsweise an der Deckelunterseite 73 angeformten Mittel 64, z.B. in Form zweier, an den sich gegenüberliegenden Seiten mit Auswölbungen 77 ausgestatteten Zapfen, die in die zweckmäßigerweise im oberen Bereich der Ausprägungen 59 an den Troginnenwandungen 65 angebrachten Durchbrüche 60 einrasten (Fig. 27, 28).

Einzelne der ungefähr vertikal verlaufenden Ausprägungen 59 an den Troginnenwandungen 65 weisen vorteilhafterweise an ihrem inneren Ende Verbreiterungen 61 auf, die, wenn der Deckel in den Trog T' eingehängt wird, von den beispielsweise ebenfalls zapfenähnlichen, an ihren sich zugewandten Enden der Seiten mit Auswölbungen 75 versehenen Ausprägungen 74 umschlossen werden (Fig. 29).

## Patentansprüche

1. Kabelkanal umfassend
eine Vielzahl von Kabelkanalelementen, von denen jedes einen U-förmigen Trog (T) aus Kunststoff und einen Deckel (D) aus Kunststoff umfaßt,
**dadurch gekennzeichnet, daß** der Kabelkanal mindestens ein Zusatzteil (27) und einen Ständer (29) aus Kunststoff aufweist,
daß jeweils zwei Tröge (T) in ihren Endbereiched über Steckelemente mit dem Zusatzteil (27) verbindbar sind, welches die zwei Tröge (T) abstützt,
und daß das Zusatzteil (27) mittels eines Steckelements mit dem im Erdreich verankerten Ständer (29) verbindbar ist.

2. Kabelkanal nach Anspruch 1, **dadurch gekennzeichnet, daß** das Zusatzteil (27) an seiner Unterseite ein Profil (32) aufweist, mit welchem der Ständer (29) verbindbar ist.

3. Kabelkanal nach Anspruch 1 oder 2, **dadurch gekennzeichnet, daß** die Tröge (T) in ihren Endbereichen mit Bohrungen (26) im Trogboden (20) versehen sind, durch welche die Steckelemente hindurchgreifen.

4. Kabelkanal nach einem der Ansprüche 1 bis 3, **dadurch gekennzeichnet, daß** das Zusatzteil (27) Bohrungen (28) aufweist, durch welche die Steckelemente hindurchgreifen.

5. Kabelkanal nach Anspruch 3 oder 4, **dadurch gekennzeichnet, daß** die Steckelemente und die von diesen durchsetzten Bohrungen (26) so bemessen sind, daß eine horizontale Bewegungsfreiheit zum Ausgleich von Längenänderungen bestehen bleibt.

6. Kabelkanal nach einem der vorangegangenen Ansprüche, **dadurch gekennzeichnet, daß** das Zusatzteil (27) entsprechende, quer zum Trog verlaufende Einkerbungen (30) zur Aufnahme gleichverlaufender Endrippen (17, 19) zweier Tröge (T) aufweist.

7. Kabelkanal nach einem der Ansprüche 3 bis 6, **dadurch gekennzeichnet, daß** das Zusatzteil (27) Bohrungen (28) zur Verbindung mit den Bohrungen (26) im Trogboden (20) durch Steckelemente aufweist.

8. Kabelkanal nach einem der Ansprüche 2 bis 7, **dadurch gekennzeichnet, daß** das Zusatzteil (27) an seiner Unterseite (31) ein vieleckiges Profil (32) zum Aufsetzen auf einen vieleckigen Ständer (29) aufweist.

9. Kabelkanal nach einem der Ansprüche 2 bis 8, **dadurch gekennzeichnet, daß** das Profil (32) an der Unterseite (31) des Zusatzteils (27) Bohrungen (58) zur Verbindung mit dem Ständer (29) aufweist.

10. Kabelkanal nach einem der Ansprüche 2 bis 9, **dadurch gekennzeichnet, daß** der Ständer (29) durch seine Form mit dem Profil (32) an der Unterseite (31) des Zusatzteils (27) verbindbar ist.

11. Kabelkanal nach einem der voranstehenden Ansprüche, **dadurch gekennzeichnet, daß** der Ständer (29) mit einem Ständerfuß (33) verbindbar ist.

12. Kabelkanal nach Anspruch 11, **dadurch gekennzeichnet, daß** der Ständer (29) durch seine Form mit Profil (35) auf dem Ständerfuß (33) verbindbar ist.

13. Kabelkanal nach Anspruch 11 oder 12, **dadurch gekennzeichnet, daß** der Ständerfuß (33) an seiner Oberseite ein der Ständerform entsprechendes Profil (35) mit Bohrlöchern (36) zur Verbindung mit dem Ständer (29) mit z.B. Steckelementen aufweist.

14. Kabelkanal nach einem der Ansprüche 4 bis 13, **dadurch gekennzeichnet, daß** ein Trägerprofil (52), dessen Länge größer ist als die der Tröge (T), zwischen dem Zusatzteil (27) und dem Trog (T) einfügbar ist und durch Steckelemente durch die vorgesehenen Bohrlöcher (28, 53) im Zusatzteil (27) kraftschlüssig verbindbar ist.

15. Kabelkanal, nach einem der voranstehenden Ansprüche, **dadurch gekennzeichnet, daß** der Ständer (29) extrudiert ist.

16. Kabelkanal nach einem der voranstehenden Ansprüche, **dadurch gekennzeichnet, daß** alle Teile des Kabelkanals aus Kunststoff sind.

17. Kabelkanal, nach einem der voranstehenden Ansprüche, wobei der Deckel (D) ungefähr eben ist, **dadurch gekennzeichnet, daß** der Kabelkanal aus neuwertigen und recycelbaren Kunststoffen hergestellt ist.

18. Kabelkanal, nach einem der vorangegangenen Ansprüche, **dadurch gekennzeichnet, daß** der Kabelkanal aus recycelten und nochmals recycelbaren Kunststoffen hergestellt ist.

19. Kabelkanal, nach einem der vorangegangenen Ansprüche, **dadurch gekennzeichnet, daß** der Kabelkanal aus einer Mischung von recycelten und nochmals recycelbaren und neuwertigen recycelbaren Kunststoffen hergestellt ist.

20. Kabelkanal nach einem der vorangegangenen Ansprüche, **dadurch gekennzeichnet, daß** der Kabelkanal ungefähr gerade ist.

21. Kabelkanal nach einem der Ansprüche 1 bis 19, **dadurch gekennzeichnet, daß** der Kabelkanal einen in einer ersten Richtung verlaufenden, ersten Abschnitt und einen, in einer zweiten zur ersten Richtung in einem beliebig festlegbaren Winkel in horizontaler Abwinklung verlaufenden zweiten Abschnitt aufweist, wobei die Trogöffnung nach oben zeigt.

22. Kabelkanal nach einem der Ansprüche 1 bis 19, **dadurch gekennzeichnet, daß** der Kabelkanal einen in einer ersten Richtung verlaufenden ersten Abschnitt und einen, in einer zweiten zur ersten Richtung in einem beliebig festlegbaren Winkel in vertikaler Abwinklung verlaufenden zweiten Abschnitt aufweist, wobei die Trogöffnung nach oben zeigt.

23. Kabelkanal nach einem der vorangegangenen Ansprüche, **dadurch gekennzeichnet, daß** der Trog (T) an den Außenwandungen (2) beispielsweise linienförmig angeordnete, beispielsweise nach oben gewölbte Trennführungslinien (3) in einem beliebig festlegbaren Winkel zur verbreiterten Trogoberkante (10) für eine nachträgliche Verkürzung des Troges (T) aufweist, wobei die Trogöffnung nach oben zeigt.

24. Kabelkanal nach einem der vorangegangenen Ansprüche, **dadurch gekennzeichnet, daß** der Trog (T) an der Innenwandung (1) z.B. linienförmig angeordnete, beispielsweise eingekerbte Trennführungslinien (3) in einem beliebig festlegbaren Winkel zur verbreiterten Trogoberkante (10) für eine nachträgliche Verkürzung des Troges (T) aufweist, wobei die Trogöffnung nach oben zeigt.

25. Kabelkanal nach einem der vorangegangenen Ansprüche, **dadurch gekennzeichnet, daß** der Trogboden (20) an einer Endrippe ohne Schloß (19) eine, in beliebiger Breite und Länge, aber nicht dem Trogboden (20) entsprechende Dicke, ungefähr horizontal hervorstehende Verlängerung (43) aufweist.

26. Kabelkanal nach Anspruch 25, **dadurch gekennzeichnet, daß** der Trogboden (20) an einer Endrippe (17) mit Schloß (15) eine der Verlängerung am anderen Trogende entsprechende Komplementärin (44) besitzt.

27. Kabelkanal nach einem der vorangegangenen Ansprüche, **dadurch gekennzeichnet, daß** der Trog (T) an mindestens einer Innenwandung (1) mindestens ein ungefähr vertikal, in beliebiger Länge, verlaufendes z.B. schienenähnliches Profil (45) aufweist.

28. Kabelkanal nach Anspruch 27, **dadurch gekennzeichnet, daß** der Deckel (D) beispielsweise an seiner Unterseite (46) mindestens eine, dem an der Troginnenwandung befindlichen Profil, entsprechende Ausprägung (47) besitzt.

29. Kabelkanal nach Anspruch 28, **dadurch gekennzeichnet, daß** am Deckel (D) z.B. an der Deckelunterseite (46) punktuelle Erhöhungen (48) in beliebiger Anzahl und Form, jedoch mindestens in der gleichen Höhe wie die dort befindliche Ausprägung (47) vorgesehen sind.

30. Kabelkanal nach einem der vorangegangenen Ansprüche, **dadurch gekennzeichnet, daß** die Oberkante des Troges (T) eine etwa horizontal nach außen verlaufende Verbreiterung (10, 72) besitzt.

31. Kabelkanal nach Ansprüchen 26 und 30, **dadurch gekennzeichnet, daß** auf der verbreiterten Trogoberkante (10) Verlegerichtungspfeile (50) in Richtung des Schloßsystems (15) angebracht sind.

32. Kabelkanal nach einem der Ansprüche 30 oder 31, **dadurch gekennzeichnet, daß** die verbreiterte Trogoberkante (10, 72) an ihrer Außenseite eine ungefähr vertikal nach unten verlaufende beliebig lange Verlängerung (42, 76) besitzt.

33. Kabelkanal nach einem der Ansprüche 30 bis 32, **dadurch gekennzeichnet, daß** die verbreiterte Trogoberkante (10) Aussparungen in beliebiger Anzahl und Größe (40) aufweist.

34. Kabelkanal nach Anspruch 33, **dadurch gekennzeichnet, daß** der Deckel (D) an seiner ungefähr vertikalen Außenseite (6a) den Aussparungen in der verbreiterten Trogoberkante (40) formkongruente z.B. hakenförmige Profile (41) besitzt.

35. Kabelkanal nach einem der Ansprüche 30 bis 34, **dadurch gekennzeichnet, daß** der Trog (T) beispielsweise an Querrippen (7) unterhalb Öffnungen mit Sicherungsclips (11) in der verbreiterten Trogoberkante (10) beliebig lange, ungefähr vertikal verlaufende beispielsweise leistenähnliche Führungshilfen (12) für Befestigungselemente (13, 14) hat.

36. Kabelkanal nach Anspruch 35, **dadurch gekennzeichnet, daß** die Öffnungen mit Sicherungsclips (11) und Führungshilfen (12) mittels Befestigungselemente (14) zur Verbindung nebeneinander liegender Tröge (T) dienen.

37. Kabelkanal nach Anspruch 35, **dadurch gekennzeichnet, daß** die Öffnungen mit Sicherungsclips (11) und Führungshilfen (12) für Befestigungselemente (13) zur Verbindung übereinander liegender Tröge (T) dienen.

38. Kabelkanal nach einem der vorangegangenen Ansprüche, **dadurch gekennzeichnet, daß** der Trog (T) an seinen Außenwandungen (2) mindestens zwei oder mehr, den Trog (T) zumindest teilweise umschließende, Querrippen (7) aufweist.

39. Kabelkanal nach Anspruch 38, **dadurch gekennzeichnet, daß** die Querrippen (7) wenigstens eine Aussparung (8) haben.

40. Kabelkanal nach einem der Ansprüche 30 bis 39, **dadurch gekennzeichnet, daß** der Trog (T) an mindestens einer Endrippe (17) ein bis maximal an die verbreiterte Trogoberkante (10) reichendes Schloßsystem (15) aufweist, das nach oben, unten und zur Trogmitte hin geöffnet ist.

41. Kabelkanal nach einem der vorangegangenen Ansprüche, **dadurch gekennzeichnet, daß** an mindestens einer der beiden Wandungen (9) des Trogs (T) und/oder dem Trogboden (20) mindestens eine Ausbruchstelle (25) vorgesehen ist.

42. Kabelkanal nach einem der voranstehenden Ansprüche, **dadurch gekennzeichnet, daß** Trog (T) und Deckel (D) durch ein Verschlußsystem verbindbar sind.

43. Kabelkanal nach einem der vorangegangenen Ansprüche, **dadurch gekennzeichnet, daß** Trog (T) und Deckel (D) ein Schnappverschlußsystem aufweisen.

44. Kabelkanal nach einem der vorangegangenen Ansprüche, **dadurch gekennzeichnet, daß** die Troginnenwandungen im oberen Bereich des Troges (T) eine nach außen versetzte Troginnenwandung (37) aufweisen.

45. Kabelkanal nach Ansprüchen 43 und 44, **dadurch gekennzeichnet, daß** im Bereich der inneren Seite der versetzten Troginnenwandung (37) vorzugsweise auf beiden Trogwandungen (9) mindestens ein konkaver Kreisabschnitt (38) für die Verbindung mit dem Deckel (D) besteht, wodurch eine Voraussetzung für das Schnappverschlußsystem gegeben ist.

46. Kabelkanal nach Anspruch 45, **dadurch gekennzeichnet, daß** der Deckel (D) des Trogs (T) mindestens an einer der beiden Deckelaußenseiten (6a) eine dem konkaven Kreisabschnitt (38) des Troges entsprechenden konvexen Kreisabschnitt (39) aufweist und somit das Verschlußsystem komplettiert.

47. Kabelkanal nach einem der Ansprüche 44 bis 46, **dadurch gekennzeichnet, daß** an mindestens einer der beiden Trogwandungen (9) im Bereich der versetzten Troginnenwandung (37) mindestens ein konvexer Kreisabschnitt für die Verbindung mit einem Deckel (D) besteht, wodurch eine Voraussetzung für ein Schnappverschlußsystem gegeben ist.

48. Kabelkanal nach Anspruch 47, **dadurch gekennzeichnet, daß** der Deckel (D) des Trogs (T) mindestens an einer der beiden Deckelaußenseiten (6a) eine dem konvexen Kreisabschnitt entsprechenden konkaven Kreisabschnitt aufweist und somit das Verschlußsystem komplettiert.

49. Kabelkanal nach einem der vorangegangenen Ansprüche, **dadurch gekennzeichnet, daß** der Deckel (D) ungefähr horizontal abgewinkelt ist, wobei der Deckel (D) einen in einer ersten Richtung verlaufenden ersten Abschnitt und einen in einer zweiten, zur ersten Richtung in einem beliebig festlegbaren Winkel verlaufenden zweiten Abschnitt aufweist.

50. Kabelkanal nach einem der Ansprüche 1 bis 48, **dadurch gekennzeichnet, daß** der Deckel (D) ungefähr vertikal abgewinkelt ist, wobei der Deckel (D) einen in einer ersten Richtung verlaufenden ersten Abschnitt und einen in einer zweiten, zur ersten Richtung in einem beliebig festlegbaren Winkel verlaufenden zweiten Abschnitt aufweist.

51. Kabelkanal nach einem der vorangegangenen Ansprüche, **dadurch gekennzeichnet, daß** der Deckel (D) mindestens eine Entlüftungsöffnung (51) aufweist.

52. Kabelkanal nach einem der vorangegangenen Ansprüche, **dadurch gekennzeichnet, daß** die Unterseite des Deckels (D) mindestens eine längs, quer oder schräg verlaufende Rippe (49) aufweist.

53. Kabelkanal nach einem der vorangegangenen Ansprüche, **dadurch gekennzeichnet, daß** die Oberflächenstruktur des Deckels (D) durch Trennführungslinien (4) charakterisiert ist.

54. Kabelkanal nach Anspruch 53, **dadurch gekennzeichnet, daß** die Trennführungslinien (4) auf der Deckeloberseite (5) für Rutschsicherheit sorgen.

55. Kabelkanal nach einem der Ansprüche 53 und 54, **dadurch gekennzeichnet, daß** die Trennführungslinien (4) in einem beliebig festzulegenden Winkel an der oberen Deckelaußenkante (6) über die Deckeloberfläche (5) verlaufen und nachträgliche Verkürzungen des Deckels (D) ermöglichen.

56. Kabelkanal nach einem der vorangegangenen Ansprüche, **dadurch gekennzeichnet, daß** der Kabelkanal im Trogboden (20) eine ungefähr in Längsrichtung verlaufende Einkerbung (21) aufweist.

57. Kabelkanal nach Anspruch 56, **dadurch gekennzeichnet, daß** die Einkerbung (21) am ihren Boden (23) Durchbrüche (24) aufweist.

58. Kabelkanal nach einem der Ansprüche 56 oder 57, **dadurch gekennzeichnet, daß** die Einkerbung zur Aufnahme formkongruenter Trennelemente (22) dient.

59. Kabelkanal nach einem der vorangegangenen Ansprüche, **dadurch gekennzeichnet, daß** die Trogwandungen (63) ausgehend von einem ungefähr horizontal verlaufenden Trogboden (20) ungefähr vertikal nach oben verlaufen.

60. Kabelkanal nach einem der Ansprüche 1 bis 58, **dadurch gekennzeichnet, daß** die Trogwandungen (9) ausgehend von einem ungefähr horizontal verlaufenden Trogboden (20) zunächst ungefähr vertikal, dann ungefähr horizontal nach außen (55), dann wieder ungefähr vertikal (37) nach oben verlaufen.

61. Kabelkanal nach einem der vorangegangenen Ansprüche, **dadurch gekennzeichnet, daß** an jeder der Troginnenwandungen (65) ungefähr von der Biegung des U-Profils ausgehend, ungefähr senkrecht zur Troginnenwandung (65) zunächst ungefähr vertikal nach oben verlaufende vorzugsweise einstückig angeformte Ausprägungen (59) angebracht sind, wobei diese Ausprägungen (59) noch unterhalb der Trogoberkante (72) ungefähr horizontal bis an die Troginnenwandung (65) verlaufen.

62. Kabelkanal nach Anspruch 61, **dadurch gekennzeichnet, daß** die Ausprägungen (59) an den Troginnenwandungen (65) beispielsweise in ihrem oberen Bereich Durchbrüche (60) aufweisen können.

63. Kabelkanal nach einem der Ansprüche 61 oder 62, **dadurch gekennzeichnet, daß** mindestens eine der Ausprägungen (59) an den Troginnenwandungen (65) nicht unbedingt über ihre gesamte Höhe an ihrem, z.B. zum Troginneren weisenden Ende eine Verbreiterung (61) aufweist.

64. Kabelkanal nach einem der vorangegangenen Ansprüche, **dadurch gekennzeichnet, daß** der Deckel (D) auf ungefähr horizontal (55) nach außen verlaufenden Trogwandungen (9) aufliegt.

65. Kabelkanal nach einem der Ansprüche 61 bis 63, **dadurch gekennzeichnet, daß** der Deckel auf den Ausprägungen (59) an den Troginnenwandungen (65) aufliegt und zwischen den ungefähr vertikal nach oben verlaufenden Trogwandungen (63) liegt.

66. Kabelkanal nach einem der Ansprüche 62 bis 65, **dadurch gekennzeichnet, daß** beispielsweise an der Deckelunterseite (73) Mittel (64) zur Sicherung des Deckels angebracht sind, die in die Durchbrüche (60) z.B. im oberen Bereich der Ausprägungen (59) an den Troginnenwandungen (65) form- und kraftschlüssig eingreifen.

67. Kabelkanal nach einem der vorangegangenen Ansprüche, **dadurch gekennzeichnet, daß** Befestigungsmittel (67) z.B. an den Deckelaußenseiten (66) beispielsweise zunächst ungefähr horizontal nach außen und im Anschluß wieder in einem spitzen Winkel nach innen und unten in Richtung der Deckelaußenseite (66) verlaufen, ohne diese jedoch zu berühren, wobei z.B. auf der inneren Seite (68) im nach innen und unten verlaufenden Bereich beispielsweise eine Auswölbung (69) angebracht ist.

68. Kabelkanal nach Anspruch 67, **dadurch gekennzeichnet, daß** die Trogwand (70) im Bereich der Aussparungen (71) in der Verbreiterung der Trogoberkante (72) so geformt ist, daß sie die Auswölbung (69) an der Innenseite des nach innen und unten verlaufenden Bereichs des Befestigungsmittels (67) an den Deckelaußenseiten (66) form- und kraftschlüssig aufnimmt.

69. Kabelkanal nach einem der Ansprüche 61 bis 68, **dadurch gekennzeichnet, daß** der Deckel z.B. an seiner Unterseite (73) beispielsweise zapfenähnliche, an ihren sich zugewandten Enden der Seiten, mit z.B. Auswölbungen (75) versehene Ausprägungen (74) aufweist, die die entsprechend geformte beispielsgemäße Verbreiterung (61) der Ausprägungen (59) an den Troginnenwandungen (65) umschließen.

70. Kabelkanal nach einem der vorangegangenen Ansprüche, **dadurch gekennzeichnet, daß** der Kabelkanal wegen seiner Materialbeschaffenheit einhundertprozentige Recycelbarkeit aufweist.

## Claims

1. Cable ducting made up of a multiplicity of cable ducting elements, each of which comprises a U-shaped trough (T) made of plastic and a plastic cover (D), **characterised in that** the cable ducting has at least one additional member (27) and a plastic stand (29), **in that** the end regions of pairs of troughs (T) can be joined by insertable elements to the additional member (27) which supports the two troughs (T), and **in that** the additional member 27 can be joined to the stand (29) anchored in the ground by means of an insertable element.

2. Cable ducting according to claim 1, **characterised in that** the additional member (27) has a profile (32) on its underside, to which the stand (29) can be joined.

3. Cable ducting according to claim 1 or 2, **characterised in that** the end regions of the troughs (T) are provided with holes (26) in the base (20) of the trough, through which the insertable elements engage.

4. Cable ducting according to one of claims 1 to 3, **characterised in that** the additional member (27) has holes (28) through which the insertable elements engage.

5. Cable ducting according to claim 3 or 4, **characterised in that** the insertable elements and the holes (26) through which they pass are dimensioned so that horizontal freedom of movement is maintained to compensate for changes of length.

6. Cable ducting according to one of the preceding claims, **characterised in that** the additional member (27) has corresponding notches (30) extending transversely of the trough, to receive end ribs (17, 19) of two troughs (T), which ribs run in the same direction.

7. Cable ducting according to one of claims 3 to 6, **characterised in that** the additional member (27) has holes (28) for joining to the holes (26) in the trough base (20) by means of insertable elements.

8. Cable ducting according to one of claims 2 to 7, **characterised in that** the additional member (27) has a polygonal profile (32) on its underside (31) for placing on a polygonal stand (29).

9. Cable ducting according to one of claims 2 to 8, **characterised in that** the profile (32) at the underside (31) of the additional member (27) contains holes (58) for joining it to the stand (29).

10. Cable ducting according to one of claims 2 to 9, **characterised in that** the stand (29) is shaped so that it can be joined to the profile (32) at the underside (31) of the additional member (27).

11. Cable ducting according to one of the preceding claims, **characterised in that** the stand (29) can be joined to a stand foot (33).

12. Cable ducting according to claim 11, **characterised in that** the stand (29) is shaped so that it can be joined to the profile (35) on the stand foot (33).

13. Cable ducting according to claim 11 or 12, **characterised in that** the top of the foot (33) of the stand has a profile (35) corresponding to the shape of the stand (29), with bore holes (36) for joining it to the stand (29) e.g. by means of insertable elements.

14. Cable ducting according to one of claims 4 to 13, **characterised in that** a carrier profile (52), the length of which is greater than that of the troughs (T), may be inserted between the additional member (27) and the trough (T), and may be joined non-positively by means of elements insertable through the bore holes (28, 53) provided in the additional member (27).

15. Cable ducting according to one of the preceding claims, **characterised in that** the stand (29) is extruded.

16. Cable ducting according to one of the preceding claims, **characterised in that** all the parts of the cable ducting are made of plastic.

17. Cable ducting according to one of the preceding claims, wherein the cover (D) is approximately flat, **characterised in that** the ducting is produced from recyclable, as-new plastics.

18. Cable ducting according to one of the preceding claims, **characterised in that** the ducting is produced from recycled plastics which can be recycled again.

19. Cable ducting according to one of the preceding claims, **characterised in that** the ducting is produced from a mixture of recycled plastics which can be recycled again and recyclable, as-new plastics.

20. Cable ducting according to one of the preceding claims, **characterised in that** the ducting is approximately straight.

21. Cable ducting according to one of claims 1 to 19, **characterised in that** the ducting comprises a first section extending in a first direction, and a second section extending at any definable angle to the first direction with a horizontal bend, with the trough aperture facing upwards.

22. Cable ducting according to one of claims 1 to 19, **characterised in that** the cable ducting comprises a first section extending in a first direction, and a second section extending at any definable angle to the first direction with a vertical bend, with the trough aperture facing upwards.

23. Cable ducting according to one of the preceding claims, **characterised in that** external walls (2) of the trough (T) have e.g. linearly arranged, e.g. upwardly curved severing guidance lines (3) at any definable angle to the widened top edge (10) of the trough, for subsequent shortening of the trough (T), with the trough aperture facing upwards.

24. Cable ducting according to one of the preceding claims, **characterised in that** the internal wall (1) of the trough (T) has e.g. linearly arranged, e.g. notched severing guidance lines (3) at any definable angle to the widened top edge (10) of the trough, for subsequent shortening of the trough (T), with the trough aperture facing upwards.

25. Cable ducting according to one of the preceding claims, **characterised in that** the trough base (20) has an elongation (43) on an end rib without locking means (19), the elongation projecting approximately horizontally to any width and length but with a thickness not corresponding to the trough base (20).

26. Cable ducting according to claim 25, **characterised in that** the trough base (20) is provided at an end rib (17) having locking means (15) with a mating part (44) corresponding to the elongation (43) at the other end of the trough.

27. Cable ducting according to one of the preceding claims, **characterised in that** the trough (T) has at least one approximately vertical profile (45) of any length, e.g. a rail-like profile, on at least one internal wall (1).

28. Cable ducting according to claim 27, **characterised in that** the cover (D) has at least one stamped-out portion (47) corresponding to the profile on the internal wall of the trough, e.g. on its underside (46).

29. Cable ducting according to claim 28, **characterised in that** punctiform elevations (48) are provided on the cover (D), e.g. at the underside (46) of the cover, in any number and form, but with at least the same height as the stamped-out portion (47) located there.

30. Cable ducting according to one of the preceding claims, **characterised in that** the top edge of the trough (T) has a widened piece (10, 72) extending approximately horizontally outwardly.

31. Cable ducting according to claims 26 and 30, **characterised in that** installation direction arrows (50) in the direction of the lock system (15) are marked on the widened top edge (10) of the trough.

32. Cable ducting according to claim 30 or 31, **characterised in that** the outside of the widened top edge (10, 72) of the trough has an elongation (42, 76) of any length extending approximately vertically downwardly.

33. Cable ducting according to one of claims 30 to 32, **characterised in that** the widened top edge (10) of the trough has apertures (40) of any number and size.

34. Cable ducting according to claim 33, **characterised in that** the cover (D) has profiles (41) on its approximately vertical outside (6a), which are shaped congruently with the apertures (40) in the widened top edge (10) of the trough and are e.g. hook-shaped.

35. Cable ducting according to one of claims 30 to 34, **characterised in that** the trough has guiding aids (12) for the fastening members (13, 14), for example on transverse ribs (7) below apertures with securing clips (11) in the widened upper edge (10) of the trough, the guiding aids being of any length, extending approximately vertically and for example being slat-like.

36. Cable ducting according to claim 35, **characterised in that** the apertures with securing clips (11) and guiding aids (12) are used to join adjacent troughs (T) by means of fastening members (14).

37. Cable ducting according to claim 35, **characterised in that** the apertures with securing clips (11) and guiding aids (12) for fastening members (13) are used to join superimposed troughs (T).

38. Cable ducting according to one of the preceding claims, **characterised in that** the trough (T) has at least two or more transverse ribs (7), at least partly surrounding it, on its external walls (2).

39. Cable ducting according to claim 38, **characterised in that** the transverse ribs (7) have at least one recess (8).

40. Cable ducting according to one of claims 30 to 39, **characterised in that** the trough (T) has a lock system (15) on at least one of the end ribs (17), the lock system extending to the widened upper edge (10) of the trough at the maximum and being open upwardly, downwardly and towards the centre of the trough.

41. Cable ducting according to one of the preceding claims, **characterised in that** at least one opening location (25) is provided on at least one of the two walls (9) of the trough (T) and/or the base (20) thereof.

42. Cable ducting according to one of the preceding claims, **characterised in that** the trough (T) and cover (D) may be joined by a closure system.

43. Cable ducting according to one of the preceding claims, **characterised in that** the trough (T) and cover (D) have a snap closure system.

44. Cable ducting according to one of the preceding claims, **characterised in that** the internal walls (1) of the trough (T) have an outwardly offset inner wall (37) in the upper part of the trough.

45. Cable ducting according to claims 43 and 44, **characterised in that** there is at least one concave segment of a circle (38) for joining to the cover (D), in the region of the internal side of the offset internal wall (37) of the trough, preferably on both trough walls (9), thereby providing a prerequisite for the snap closure system.

46. Cable ducting according to claim 45, **characterised in that** the cover (D) of the trough (T) has a convex segment of a circle (39) matching the concave segment (38) of the trough, at least on one of its two external sides (6a), and thus completes the closure system.

47. Cable ducting according to one of claims 44 to 46, **characterised in that** there is at least one convex segment of a circle for joining to a cap D, on at least one of the two trough walls 9 in the region of the offset internal walls 37 of the trough, thereby providing a prerequisite for a snap closure system.

48. Cable ducting according to claim 47, **characterised in that** the cover (D) of the trough (T) has a concave segment of a circle matching the convex segment, at least on one of its two extemal sides (6a), and thus completes the closure system.

49. Cable ducting according to one of the preceding claims, **characterised in that** the cover (D) is angled approximately horizontally; having a first section extending in a first direction and a second section extending in a second direction at any definable angle to the first.

50. Cable ducting according to claim 47 or 48, **characterised in that** the cover (D) is angled approximately vertically, having a first section extending in a first direction and a second section extending in a second direction at any definable angle to the first.

51. Cable ducting according to one of the preceding claims, **characterised in that** the cover (D) has at least one vent (51).

52. Cable ducting according to one of the preceding claims, **characterised in that** the underside of the cover (D) has at least one rib (49) running longitudinally, transversely or diagonally.

53. Cable ducting according to one of the preceding claims, **characterised in that** the surface structure of the cover (D) is **characterised by** severing guidance lines (4).

54. Cable ducting according to claim 53, **characterised in that** the severing guidance lines (4) on the top of the cover prevent slipping.

55. Cable ducting according to claim 53 or 54, **characterised in that** the severing guidance lines (4) run over the cover surface (5) at any definable angle to the upper external edge (6) of the cover, and permit subsequent shortening of the cover (D).

56. Cable ducting according to one of the preceding claims, **characterised in that** the cable duct in the base (20) of the trough has a notch (21) running approximately in a longitudinal direction.

57. Cable ducting according to claim 56, **characterised in that** the bottom (23) of the notch (21) contains apertures (24).

58. Cable ducting according to claim 56 or 57, **characterised in that** the notch is used to receive congruently shaped separating members (22).

59. Cable ducting according to one of the preceding claims, **characterised in that** the trough walls (63) start from an approximately horizontal trough base (20) and extend approximately vertically upwards.

60. Cable ducting according to one of claims 1 to 58, **characterised in that** the trough walls (9), starting from an approximately horizontal trough base (20), extend first approximately vertically, then approximately horizontally outwardly (55), then again approximately vertically (37) upwardly.

61. Cable ducting according to one of the preceding claims, **characterised in that** on each of the internal walls (65) of the trough, starting approximately fromthe bend in the (U) profile and approximately normal to the internal wall (65), preferably integral stamped-out portions (59) are provided, first extending approximately vertically upwardly, these portions (59) extending approximately horizontally to the internal wall (65), still below the top edge (72) of the trough.

62. Cable ducting according to claim 61, **characterised in that** the stamped-out portions (59) on the internal walls (65) of the trough may have apertures (60), for example in their upper region.

63. Cable ducting according to claim 61 or 62, **characterised in that** at least one of the apertures (59) in the internal walls (65) of the trough has a widened part (61), for example at its end towards the interior of the trough, not necessarily over its whole height.

64. Cable ducting according to one of the preceding claims, **characterised in that** the cover (D) rests on trough walls (9) extending approximately horizontally (55) outwardly.

65. Cable ducting according to one of claims 61 to 63, **characterised in that** that the cover rests (62) on the stamped-out portions (59) on the internal trough walls (65) and is located between the trough walls (63) which extend approximately vertically upwardly.

66. Cable ducting according to one of claims 62 to 65, **characterised in that** means (64) for securing the cover are mounted e.g. on its underside (73) and engage positively and non-positively in the apertures (60), for example in the upper part of the stamped-out portions (59) on the internal walls (65) of the trough.

67. Cable ducting according to one of the preceding claims, **characterised in that** fastening means (67) e.g. at the external sides (66) of the cover may for example extend first approximately horizontally outwardly, then back at an acute angle inwardly and downwardly towards the outside (66) of the cover but without touching it, a curved portion (69) for example being provided e.g. at the internal side (68) in the part extending inwardly and downwardly.

68. Cable ducting according to claim 67, **characterised in that** the wall (70) of the trough is shaped, in the region of recesses (71) in the widened part of the top edge (72), so that it positively and non-positively receives the curved portion (69) inside the inwardly and downwardly extending part of the fastening means (67) at the external sides (66) of the cover.

69. Cable ducting according to one of claims 61 to 68, **characterised in that** e.g. the underside (73) of the cover may for example have pin-like stamped-out portions (74), provided e.g. with curves (75) at their facing ends of the sides, the stamped-out portions (74) surrounding the correspondingly shaped e.g. widened part (61) of the stamped-out portions (59) on the intemal walls (65) of the trough.

70. Cable ducting according to one of the preceding claims, **characterised in that** it is 100% recyclable owing to the nature of its material.

## Revendications

1. Caniveau de câbles composé d'une pluralité d'éléments de caniveau de câble, dont chaque élément de caniveau comprend une cuve (T) en forme de U en plastique et un couvercle (D) en plastique, **caractérisé en ce que** le caniveau de câbles présente au moins une partie supplémentaire (27) et un montant (29) en plastique, **en ce que** respectivement deux cuves (T) peuvent être reliées dans leurs zones d'extrémité à la partie supplémentaire (27) par des éléments emboîtables, laquelle supporte les deux cuves (T) et **en ce que** la partie supplémentaire (27) peut être reliée au montant (29) ancré dans la terre au moyen d'un élément emboîtable.

2. Caniveau de câbles selon la revendication 1, **caractérisé en ce que** la partie supplémentaire (21) présente sur sa face inférieure un profilé (32) avec lequel le montant (29) peut être relié.

3. Caniveau de câbles selon la revendication 1 ou 2, **caractérisé en ce que** les cuves (T) sont pourvues dans leurs zones d'extrémité d'alésages (26) dans le fond de cuve (20) par lesquels passent les éléments emboîtables.

4. Caniveau de câbles selon l'une quelconque des revendications 1 à 3, **caractérisé en ce que** la partie supplémentaire (27) présente des alésages (28) par lesquels passent les éléments emboîtables.

5. Caniveau de câbles selon la revendication 3 ou 4, **caractérisé en ce que** les éléments emboîtables et les alésages (26) traversés par ceux-ci sont dimensionnés de telle sorte qu'il reste une liberté dé mouvement horizontale pour compenser les variations de longueur.

6. Caniveau de câbles selon l'une quelconque des revendications précédentes, **caractérisé en ce que** la partie supplémentaire (27) présente des entailles (30) appropriées et transversales à la cuve pour le logement de nervures d'extrémité (17, 19), allant dans le même sens, de deux cuves (T).

7. Caniveau de câbles selon l'une quelconque des revendications 3 à 6, **caractérisé en ce que** la partie supplémentaire (27) présente des alésages (28) pour la liaison avec les alésages (26) dans le fond de cuve (20) par des éléments emboitables (28).

8. Caniveau de câbles selon l'une quelconque des revendications 2 à 7, **caractérisé en ce que** la partie supplémentaire (27) présente sur sa face inférieure (31) un profilé (32) polygonal à poser sur un montant (29) polygonal.

9. Caniveau de câbles selon l'une quelconque des revendications 2 à 8, **caractérisé en ce que** le profilé (32) présente sur le côté inférieur (31) de la partie supplémentaire (27) des alésages (58) pour la liaison avec le montant (29).

10. Caniveau de câbles selon l'une quelconque des revendications 2 à 9, **caractérisé en ce que** le montant (29) peut être relié, grâce à sa forme au profilé (32) sur le côté inférieur (31) de la partie supplémentaire (27).

11. Caniveau de câbles selon l'une quelconque des revendications précédentes, **caractérisé en ce que** le montant (29) peut être relié à un,pied de montant (33).

12. Caniveau de câbles selon la revendication 11, **caractérisé en ce que** le montant (29) peut être relié grâce à sa forme au profilé (35) sur le pied de montant (33).

13. Caniveau de câbles selon la revendication 11 ou 12, **caractérisé en ce que** le pied de montant (33) présente sur sa face supérieure un profilé (35) adapté à la forme du montant avec des trous de perçage (36) pour la liaison avec le montant (29), par exemple avec des éléments emboîtables.

14. Caniveau de câbles selon l'une quelconque des revendications 4 à 13, **caractérisé en ce qu'**un profilé de support (52), dont la longueur est supérieure à celle des cuves (T), peut être inséré entre la partie supplémentaire (27) et la cuve (T) et peut être relié par adhérence par des éléments emboîtables passés à travers les trous de perçage prévus (28, 53) dans la partie supplémentaire (27).

15. Caniveau de câbles selon l'une quelconque des revendications précédentes, **caractérisé en ce que** le montant (29) est extrudé.

16. Caniveau de câbles selon l'une quelconque des revendications précédentes, **caractérisé en ce** toutes les parties du caniveau de câbles sont en plastique.

17. Caniveau de câbles selon l'une quelconque des revendications précédentes, le couvercle (D) étant à peu près plan, **caractérisé en ce que** le caniveau de câbles est fabriqué à partir de plastiques à l'état neuf et de plastiques recyclables.

18. Caniveau de câbles selon l'une quelconque des revendications précédentes, **caractérisé en ce que** le caniveau de câbles est fabriqué à base de plastiques recyclés et de plastiques encore recyclables.

19. Caniveau de câbles selon l'une quelconque des revendications précédentes, **caractérisé en ce que** le caniveau de câbles est fabriqué à base d'un mélange de plastiques recyclés, de plastiques encore recyclables et de plastiques recyclables et à l'état neuf.

20. Caniveau de câbles selon l'une quelconque des revendications précédentes, **caractérisé en ce que** le caniveau de câbles est à peu près droit.

21. Caniveau de câbles selon l'une quelconque des revendications 1 à 19, **caractérisé en ce que** le caniveau de câbles présente une première partie allant dans une première direction et une deuxième partie coudée horizontalement dans un angle quelconque par rapport à la première direction, l'ouverture de cuve étant dirigée vers le haut.

22. Caniveau de câbles selon l'une quelconque des revendications 1 à 19, **caractérisé en ce que** le caniveau de câbles présente une première partie allant dans une première direction et une deuxième partie coudée verticalement dans un angle quelconque par rapport à la première direction, l'ouverture de cuve étant dirigée vers le haut.

23. Caniveau de câbles selon l'une quelconque des revendications précédentes, **caractérisé en ce que** la cuve (T) présente des lignes de guidage de séparation (3) disposées par exemple en forme de ligne sur les parois externes (2), incurvées par exemple vers le haut, dans un angle définissable de façon quelconque par rapport au bord supérieur élargi de la cuve (10), pour un raccourcissement ultérieur de la cuve (T), l'ouverture de la cuve étant dirigée vers le haut

24. Caniveau de câbles selon l'une quelconque des revendications précédentes, **caractérisé en ce que** la cuve (T) présente des lignes de guidage de séparation (3) disposées par exemple en forme de ligne sur la paroi interne (1), par exemple entaillées, dans un angle définissable de façon quelconque par rapport au bord supérieur élargi de la cuve (10) pour un raccourcissement ultérieur de la cuve, l'ouverture de la cuve étant dirigée vers le haut.

25. Caniveau de câbles selon l'une quelconque des revendications précédentes, **caractérisé en ce que** le fond de cuve (20) présente sur une nervure d'extrémité sans serrure (19) un prolongement (43) débordant à peu près horizontalement, dans une largeur et longueur quelconques, mais non adapté au fond de cuve (20).

26. Caniveau de câbles selon la revendication 25, **caractérisé en ce que** le fond de cuve (20) présente sur une nervure d'extrémité (17) avec serrure (15) un logement complémentaire (44) approprié au prolongement sur l'autre extrémité de cuve.

27. Caniveau de câbles selon l'une quelconque des revendications précédentes, **caractérisé en ce que** la cuve (T) présente sur au moins une paroi interne (1) au moins un profilé (45) allant à peu près dans le sens vertical, de longueur quelconque, ressemblant par exemple à un rail.

28. Caniveau de câbles selon la revendication 27, **caractérisé en ce que** le couvercle (D) présente par exemple sur sa face inférieure (46) au moins une empreinte (47) appropriée au profilé se trouvant sur la paroi interne de cuve.

29. Caniveau de câbles selon la revendication 28, **caractérisé en ce que** sur le couvercle, par exemple sur le côté inférieur du couvercle (46) sont prévues des élévations (48) ponctuelles, dans un nombre et une forme quelconques, mais au moins de la même hauteur que l'empreinte (47) se trouvant à cet endroit.

30. Caniveau de câbles selon l'une quelconque des revendications' précédentes, **caractérisé en ce que** le bord supérieur de la cuve (T) présente un élargissement (10, 72) agencé à peu près horizontalement vers l'extérieur.

31. Caniveau de câbles selon les revendication 26 et 30, **caractérisé en ce que** des flèches de sens de pose (50) sont disposées dans le sens du système de serrure (15) sur le bord supérieur élargi de la cuve (10).

32. Caniveau de câbles selon l'une des revendications. 30 ou 31, **caractérisé en ce que** le bord supérieur élargi de la cuve (10, 72)) présente sur son côté extérieur un prolongement (42, 76)) de longueur quelconque et allant à peu près verticalement vers le bas.

33. Caniveau de câbles salon l'une quelconque des revendications 30 à 32, **caractérisé en ce que** le bord supérieur élargi de la cuve (10) présente des évidements (40) en nombre et de taille quelconques.

34. Caniveau de câbles selon la revendication 33, **caractérisé en ce que** le couvercle (D) présente des profilés (41) congruents au niveau de la forme, par exemple en forme de crochets, sur son côté extérieur (6a) à peu près vertical pour les évidements sur le bord supérieur élargi de la cuve (40).

35. Caniveau de câbles selon l'une quelconque des revendications 30 à 34, **caractérisé en ce que** la cuve (T) présente par exemple sur les nervures transversales (7) au-dessous d'ouvertures avec des clips de sécurité (11) dans le bord supérieur élargi de la cuve (10) des aides de guidage (12) de longueur quelconque, à peu près verticaux, par exemple semblables à des baguettes, pour les éléments de fixation (13, 14).

36. Caniveau de câbles selon la revendication 35, **caractérisé en ce que** les ouvertures avec des clips de sécurité (11) et des aides de guidage (12) servent à la liaison de cuves (T) juxtaposées au moyen d'éléments de fixation (14).

37. Caniveau de câbles selon la revendication 35, **caractérisé en ce que** les ouvertures avec des clips de sécurité (11) et des aides de guidage (12) pour des éléments de fixation (13) servent à la liaison de cuves superposées.

38. Caniveau de câbles selon l'une quelconque des revendications précédentes, **caractérisé en ce que** la cuve (T) présente sur ses parois externes (2) au moins deux nervures transversales (7) ou plus, qui entourent la cuve (T) au moins partiellement.

39. Caniveau de câbles selon la revendication 38, **caractérisé en ce que** les nervures transversales (7) ont au moins un évidement (8).

40. Caniveau de câbles selon l'une quelconque des revendications 30 à 39, **caractérisé en ce que** la cuve (T) présente sur au moins l'une des nervures d'extrémité (17) un système de serrure (15) qui va au maximum jusqu'au bord supérieur élargi de la cuve (10) et est ouvert vers le haut, vers le bas et en direction du centre de la cuve.

41. Caniveau de câbles selon l'une quelconque des revendications précédentes, **caractérisé en ce qu'**au moins un endroit creusé (25) est prévu sur au moins l'une des deux parois (9) de la cuve (T) et/ou le fond de cuve (20).

42. Caniveau de câbles selon l'une quelconque des revendications précédentes, **caractérisé en ce que** la cuve (T) et le couvercle (D) peuvent être reliés par un système de fermeture.

43. Caniveau de câbles selon l'une quelconque des révendications précédentes, **caractérisé en ce que** la cuve (T) et le couvercle (D) présentent un système de fermeture à déclic.

44. Caniveau de câbles selon l'une quelconque des revendications précédentes, **caractérisé en ce que** les parois internes de cuve présentent une paroi interne décalée de cuve (37) dans la zone supérieure de la cuve (T).

45. Caniveau de câbles selon les revendications 43 et 44, **caractérisé en ce que**, dans la zone du côté intéridur de la paroi interne décalée de la cuve (37) et de préférence sur les deux parois de cuve (9), au moins une partie circulaire. (38) concave est présente pour la liaison avec le couvercle (D), ce qui est une condition préalable à un système de fermeture à déclic.

46. Caniveau de câbles selon la revendication 45, **caractérisé en ce que** le couvercle (D) de la cuve (T) présente sur au moins l'un des deux côtés extérieurs du couvercle (6a) une partie circulaire (39) convexe et appropriée à la partie circulaire (38) concave de la cuve et complète ainsi le système de fermeture.

47. Caniveau de câbles selon l'une quelconque des revendications 44 à 46, **caractérisé en ce que**, sur au moins l'une des deux parois internes de cuve (9) et dans la zone de la paroi interne décalée de la cuve (37), il y a au moins une partie circulaire convexe pour la liaison avec un couvercle (D), ce qui est une condition préalable à un système de fermeture à déclic.

48. Caniveau de câbles selon la revendication 47, **caractérisé en ce que** le couvercle (D) de la cuve (T) présente sur au moins l'un des deux côtés extérieurs du couvercle (6a) une partie circulaire concave et appropriée à la partie circulaire (39) convexe et complète ainsi le système de fermeture.

49. Caniveau de câbles selon l'une quelconque des revendications précédentes, **caractérisé en ce que** le couvercle (D) est coudé à peu près horizontalement, ce qui veut dire que le couvercle (D) présente une première partie allant dans une première direction et une deuxième partie allant dans un angle définissable de façon quelconque par rapport à la première direction.

50. Caniveau de câbles selon l'une quelconque des revendications 1 à 48, **caractérisé en ce que** le couvercle (D) est coudé à peu près verticalement, ce qui veut dire que le couvercle (D) présente une première partie allant dans une direction et une deuxième partie formant un angle définissable de façon quelconque par rapport à la première direction.

51. Caniveau de câbles selon l'une quelconque des revendications précédentes, **caractérisé en ce que** le couvercle (D) présente au moins une ouverture de ventilation (51).

52. Caniveau de câbles selon l'une quelconque des revendications précédentes, **caractérisé en ce que** le cité inférieur du couvercle (D) présente au moins une nervure (49) agencée de façon longitudinale, transversale ou inclinée.

53. Caniveau de câbles selon l'une quelconque des revendications précédentes, **caractérisé en ce que** la structure de surface du couvercle (D) est **caractérisée par** des lignes de guidage de séparation (4).

54. Caniveau de câbles selon la revendication 53, **caractérisé en ce que** les lignes de guidage de séparation (4) sur le dessus du couvercle (5) assurent la sécurité antidérapage.

55. Caniveau de câbles selon les revendications 53 .et 54, **caractérisé en ce que** les lignes de guidage de séparation (4) sont agencées en formant un angle à définir de façon quelconque sur le bord externe supérieur du couvercle (6) à la surface du couvercle (5) et permettent des raccourcissements ultérieurs du couvercle (D).

56. Caniveau de câbles selon l'une quelconque des revendications précédentes, **caractérisé en ce que** le caniveau de câbles présente dans le fond de cuve (20) une entaille (21) allant à peu près dans le sens longitudinal.

57. Caniveau de câbles selon la revendication 56, **caractérisé en ce que** l'entaille (21) présente des passages (24) sur son fond (23).

58. Caniveau de câbles selon l'une des revendications 56 ou 57, **caractérisé en ce que** l'entaille sert à loger des éléments de séparation (22) congruents au niveau de la forme.

59. Caniveau de câbles selon l'une quelconque des revendications précédentes, **caractérisé en ce que** les parois de cuve (63) partent d'un, fond de cuve (20) agencé à peu près horizontalement et s'étendent à peu près verticalement vers le haut.

60. Caniveau de câbles selon l'une quelconque des revendications 1 à 58, **caractérisé en ce que** les parois de cuve (9) s'étendent d'abord à peu près verticalement en partant d'un fond de cuve (20) à peu près horizontal, puis à peu près horizontalement vers l'extérieur (55) et ensuite à nouveau sensiblement verticalement (37) vers le haut.

61. Caniveau de câbles selon l'une quelconque des revendications précédentes, **caractérisé, en ce que** des empreintes (59) formées de préférence d'une seule pièce, partant à peu près de la pliure du profilé en U, s'étendant à peu près perpendiculairement à la paroi interne de la cuve (65) et d'abord sensiblement verticalement vers le haut, sont disposées sur chacune des parois internes de la cuve (65), ces empreintes (59) étant disposées encore au-dessous du bord supérieur de la cuve (72) à peu près horizontalement jusqu'à la paroi interne de la cuve (65).

62. Caniveau de câbles selon la revendication 61, **caractérisé en ce que** les empreintes (59) sur les parois internes de cuve (65) peuvent présenter des passages (60) par exemple dans leur zone supérieure.

63. Caniveau de câbles selon l'une des revendications 61 ou 62, **caractérisé en ce qu'**au moins une des empreintes (59) sur les parois internes de cuve (65) ne présente pas forcément un élargissement (61) sur toute sa hauteur sur son extrémité dirigée par exemple vers l'intérieur de la cuve.

64. Caniveau de câbles selon l'une quelconque des revendications précédentes, **caractérisé en ce que** le couvercle (D) repose sur des parois de cuve (9) s'étendant à peu près horizontalement (55) vers l'extérieur.

65. Caniveau de câbles selon l'une quelconque des revendications 61 à 63, **caractérisé en ce que** le couvercle repose sur les empreintes (59) sur les parois internes de cuve (65) et est disposé entre les parois de cuve (63) allant à peu près verticalement vers le haut.

66. Caniveau de câbles selon l'une quelconque des revendications 62 à 65, **caractérisé en ce que** par exemple sur le dessous du couvercle (73) sont disposés des moyens (64) pour l'arrimage du couvercle qui s'engagent par conjugaison de forme et adhérence dans les passages (60) par exemple dans la zone supérieure des empreintes (59) sur les' parois internes de cuve (65).

67. Caniveau de câbles selon l'une quelconque des revendications précédentes, **caractérisé en ce que** des moyens de fixation (67) sont disposés par exemple sur les côtés extérieurs du couvercle (66), par exemple d'abord à peu près horizontalement vers l'extérieur et ensuite à nouveau en formant un angle aigu vers l'intérieur et vers le bas en direction du côté extérieur du couvercle (66), sans toucher celui-ci, une partie cintrée (69) étant disposée par exemple sur le côté intérieur (68) dans la zone allant vers l'intérieur et le bas.

68. Caniveau de câbles selon la revendication 67, **caractérisé en ce que** la paroi de cuve (70) est formée dans la zone des évidements (71) dans l'élargissement du bord supérieur de cuve (72) de telle façon qu'elle reçoit par conjugaison de forme et adhérence la partie cintrée (69) sur le côté intérieur de la zone, allant vers l'intérieur et vers le bas, du moyen de fixation (67) sur les côtés extérieurs, du couvercle (66).

69. Caniveau de câbles selon l'une quelconque des revendications 61 à 68, **caractérisé en ce que** le couvercle présente sur. son côté inférieur (73) des empreintes (74) par exemple en forme de tenons, dotées par exemple de parties cintrées (75) sur leurs extrémités, tournées vers eux, des côtés, lesquelles empreintes entourent l'élargissement (61), conforme à l'exemple et de. forme appropriée, des'empreintes (59) sur les parois internes de la cuve (65).

70. Caniveau de câbles selon l'une quelconque des revendications précédentes, **caractérisé en ce que** le caniveau de câbles peut être recyclé à 100% du fait de la nature de ses matériaux.
